# EUROPEAN PATENT APPLICATION

(11) **EP 4 811 647 A1**
(43) Date of publication of application: **23.09.2026**
(21) Application number: 26163011.5
(22) Date of filing: 06.03.2026
(51) Int. Cl.: H02P 25/064, B60L 13/03, H02K 41/02, H02K 41/03, H02P 6/00, H02P 25/06

(54) **SYSTEMS AND METHODS FOR CURVE CORRECTION AND COMPENSATION OF INDEPENDENT CART TRANSPORT SYSTEM**

(30) Priority: 17.03.2025 US 202563773204 P; 30.09.2025 US 202519345420
(71) Applicant: Rockwell Automation Technologies, Inc., Mayfield Heights, OH 44124 (US)
(72) Inventor: Perreault, Brian M., Mayfield Heights, OH, 44124 (US); Huang, Yuhong, Mayfield Heights, OH, 44124 (US); Young, Jason A., Mayfield Heights, OH, 44124 (US)
(74) Representative: Grünecker Patent- und Rechtsanwälte PartG mbB

(57) **Abstract**

A method of controlling movement of a mover along a track of a linear drive system includes obtaining track data from simulated or actual movement of the mover along the track. The method includes determining, based on the track data, a value of angular misalignment between at least one drive coil of the track and a magnet array of the mover due to curvature of one of multiple track sections. The method also includes determining, based on the value of angular misalignment, a correction for a control of at least one of the drive coils. The method also includes operating the at least one of the drive coils according to the correction for the control to compensate for the angular misalignment.

## Description

### CROSS-REFERENCE TO RELATED PATENT APPLICATION

This application claims the benefit of and priority to U.S. Provisional Application No. 63/773,204, filed March 17, 2025, the entire disclosure of which is incorporated by reference herein.

### BACKGROUND

The present disclosure relates generally to a linear drive system. More specifically, the present disclosure relates to a control system for a linear drive system.

### SUMMARY

One implementation of the present disclosure is a system for controlling movement of movers, according to some embodiments. In some embodiments, the system includes a track, a mover, and processing circuitry. In some embodiments, the track includes multiple track sections that define a travel path. The track sections can include drive coils. In some embodiments, the mover includes a magnet array. The mover can be configured to be induced to move along the track by energization of the drive coils of the track sections. In some embodiments, the processing circuitry is configured to obtain track data from simulated or actual movement of the mover along the track. In some embodiments, the processing circuitry is configured to determine a value of angular misalignment between at least one of the drive coils and the magnet array due to curvature of one of the plurality of track sections based on the track data. In some embodiments, the processing circuitry is configured to determine, based on the value of angular misalignment, a correction for a control of at least one of the drive coils. In some embodiments, the processing circuitry is configured to operate the at least one of the drive coils according to the correction for the control to compensate for the angular misalignment.

In some embodiments, the processing circuitry is further configured to update a digital twin of the track or the mover based on the value of angular misalignment. In some embodiments, the processing circuitry is configured to determine the value of angular misalignment between the at least one of the drive coils and the magnet array based on back-electromotive force determined based on feedback obtained from the at least one of the drive coils as the mover is induced to move along the track by the drive coils.

In some embodiments, the back-electromotive force is obtained either (i) during a time period in which the drive coils are intermittently shorted, or (ii) during a time period over which the drive coils are continuously energized such that the mover travels at at least a threshold speed. In some embodiments, the processing circuitry is configured to determine the value of angular misalignment between the at least one of the drive coils and the magnet array based on a comparison between sensor feedback obtained from a first position sensor of the track and a second position sensor of the track.

In some embodiments, the processing circuitry is configured to determine the value of angular misalignment based on a simulation of the mover along the track. In some embodiments, the simulation is based on user-input curves of the track.

In some embodiments, the processing circuitry is configured to determine the value of angular misalignment based on a simulation of the mover along the track. In some embodiments, the simulation uses curves of the track derived from user-input position and relative angular orientation of subsequent track segments.

In some embodiments, the track includes multiple multi-axis position sensors configured to measure magnetic fields in multiple directions. In some embodiments, the processing circuitry is configured to determine the value of angular misalignment based on a ratio of magnetic field strength between two of the multiple directions.

In some embodiments, the correction for the control includes a correction for a phase angle of at least one of the drive coils. In some embodiments, the processing circuitry is configured to determine the correction for the control based on a ratio between the value of angular misalignment and a cycle length of the drive coils.

In some embodiments, the processing circuitry is further configured to determine, based on sensor data from sensors of the track, a position of the mover along the track, and correct the position of the mover along the track using numerical integration of a spline path of the track. In some embodiments, the processing circuitry is further configured to determine, based on sensor data from sensors of the track, a speed of the mover, and correct the speed of the mover using the value of angular misalignment.

In some embodiments, the processing circuitry is configured to use an observer control scheme to operate the drive coils. In some embodiments, the processing circuitry is configured to use modified feedback functions for the observer control scheme that account for the angular misalignment.

Another implementation of the present disclosure is a method of controlling movement of a mover along a track of a linear drive system, according to some embodiments. In some embodiments, the method includes obtaining track data from simulated or actual movement of the mover along the track. In some embodiments, the method includes determining, based on the track data, a value of angular misalignment between at least one drive coil of the track and a magnet array of the mover due to curvature of one of multiple track sections. In some embodiments, the method includes determining, based on the value of angular misalignment, a correction for a control of at least one of the drive coils. In some embodiments, the method includes operating the at least one of the drive coils according to the correction for the control to compensate for the angular misalignment.

In some embodiments, the value of angular misalignment is determined based on back-electromotive force determined based on feedback obtained from the at least one of the drive coils as the mover is induced to move along the track by the drive coils. In some embodiments, the value of angular misalignment between the at least one of the drive coils and the magnet array is determined based on a comparison between sensor feedback obtained from a first position sensor of the track and a second position sensor of the track.

In some embodiments, the value of angular misalignment is determined based on a simulation of the mover along the track. In some embodiments, the simulation is based on either (i) user-input curves of the track or (ii) curves of the track that are assumed based on user-input position and relative angular orientation of subsequent track segments.

In some embodiments, the track data includes sensor data obtained from multiple multi-axis position sensors. In some embodiments, the multi-axis position sensors are configured to measure magnetic fields in multiple directions. In some embodiments, the value of angular misalignment is determined based on a ratio of magnetic field strength between two of the multiple directions. In some embodiments, the method includes adjusting at least one of a position parameter, a velocity parameter, or a digital twin based on the angular misalignment

Another implementation of the present disclosure is a linear drive system, according to some embodiments. In some embodiments, the linear drive system includes a track, a mover, and processing circuitry. In some embodiments, the track includes multiple track sections that define a travel path. The plurality of track sections can include coils. In some embodiments, the mover includes a magnet array. The mover can be configured to be induced to move along the track by energization of the coils of the track sections. In some embodiments, the processing circuitry is configured to obtain track data from simulated or actual movement of the mover along the track. In some embodiments, the processing circuitry is configured to determine a value of angular misalignment between at least one of the coils and the magnet array due to curvature of one of the track sections based on the track data. In some embodiments, the processing circuitry is configured to adjust operation of the simulated or actual movement of the mover along the track based on the value of angular misalignment.

This summary is illustrative only and is not intended to be in any way limiting. Other aspects, inventive features, and advantages of the devices or processes described herein will become apparent in the detailed description set forth herein, taken in conjunction with the accompanying figures, wherein like reference numerals refer to like elements.

### BRIEF DESCRIPTION OF THE FIGURES

The disclosure will become more fully understood from the following detailed description, taken in conjunction with the accompanying figures, wherein like reference numerals refer to like elements, in which:
FIG. 1 is a schematic representation of an exemplary control system for a linear drive system, according to some embodiments.
FIG. 2 is a sectional view of a mover and track segment included in the linear drive system taken at 2-2 of FIG. 1, according to some embodiments.
FIG. 3 is a bottom plan view of the mover of FIG. 2, according to some embodiments.
FIG. 4 is a partial side cutaway view of the mover and track segment of FIG. 2, according to some embodiments.
FIG. 5 is a sectional view of another embodiment of a mover and track segment included in the linear drive system taken at 2-2 of FIG. 1, according to some embodiments.
FIG. 6 is a partial side cutaway view of the mover and track segment of FIG. 5, according to some embodiments.
FIG. 7 is a partial top cutaway view of the mover and track segment of FIG. 2, according to some embodiments.
FIG. 8 is a block diagram representation of the control system of FIG. 1, according to some embodiments.
FIG. 9 is a perspective view of a mover for the linear drive system of FIG. 1, according to some embodiments.
FIG. 10 is a diagram of a track system including the mover and track segment of FIG. 2 with multiple zones or segments and multiple paths, according to some embodiments.
FIG. 11A is a block diagram of a control system for the track system of FIG. 10 to provide various speed limits for various track segments, according to some embodiments.
FIG. 11B is a block diagram of a portion of a controller of FIG. 11A, according to some embodiments.
FIG. 12 is diagram illustrating a curved portion of the track system of FIG. 10, according to some embodiments.
FIG. 13 is a diagram illustrating misalignment between a magnet array of a mover and a stator of a track segment, according to some embodiments.
FIG. 14 is another diagram illustrating an offset between the magnet array and the stator due to the misalignment of FIG. 13, according to some embodiments.
FIG. 15 is a graph illustrating deleterious effects of misalignment upon thrust of a mover, according to some embodiments.
FIG. 16 is another diagram illustrating the offset between the magnet array and the stator due to the misalignment of FIG. 13, according to some embodiments.
FIG. 17 is a diagram illustrating movement of the mover around a curved track portion, according to some embodiments.
FIG. 18 is a diagram of cubic splines forming a curved path with a changing radius, according to some embodiments.
FIG. 19 is a diagram of cubic splines forming a circular path, according to some embodiments.
FIG. 20 is a diagram of cubic splines forming a curved path including inflection points, according to some embodiments.
FIG. 21 is a diagram illustrating a magnetic field of one of the movers, according to some embodiments.
FIG. 22 is a flow diagram of a method for correcting operation of a linear drive system to account for angular misalignment, according to some embodiments.

### DETAILED DESCRIPTION

Before turning to the figures, which illustrate certain exemplary embodiments in detail, it should be understood that the present disclosure is not limited to the details or methodology set forth in the description or illustrated in the figures. It should also be understood that the terminology used herein is for the purpose of description only and should not be regarded as limiting.

Referring generally to the FIGURES, a linear drive system includes multiple track sections and one or more movers. The movers each include a magnet array and the track sections (e.g., segments) can include drive coils. The drive coils can be energized by one or more segment controllers in order to induce motion of the one or more movers about the track sections. In some embodiments, one or more of the track sections are curved. When the movers transport along the curved track sections, angular misalignment can occur between a longitudinal axis of the magnet array of the mover and a longitudinal axis of the drive coil. This angular misalignment can result in offset between the magnet arrays and the drive coils, which can result in phase offset between the drive coils and the magnet arrays. The phase offset can result in improper energization of the drive coils which, in certain cases, can result in deceleration or even negative thrust being applied to the movers.

In order to correct for the angular misalignment, a central controller can determine the angular misalignment and correct operation of the drive coils in order to account for (e.g., compensate for) that phase offset between the drive coils and the magnet arrays. In some embodiments, the track sections include multiple sensors that are disposed along the track sections and are configured to report position and velocity of the mover along the track sections. The central controller can use a comparison between various sensors of the track sections in order to estimate the angular misalignment. In some embodiments, the sensors are multi-axis sensors configured to measure magnetic fields in multiple directions. In some embodiments, the central controller can determine the angular misalignment based on a comparison between strength of the magnetic fields in a first direction and a second direction. In some embodiments, the central controller is configured to use back-electromotive force signals obtained from the drive coils. For example, the drive coils can operate to induce motion of the mover along the track sections at a threshold speed or greater and the central controller can, based on the back-electromotive force, determine the angular misalignment at multiple locations along the track sections. The angular misalignment or phase corrections can be stored in a database along with a corresponding position such that the drive coils can be operated in a compensated manner to account for the angular misalignment. In some embodiments, the central controller is configured to obtain back-electromotive force as the movers are manually moved (e.g., by hand) by a user. The central controller may also determine the angular misalignment based on a simulation or model of the track sections and one or more user inputs. In some embodiments, the one or more user inputs include curves of the track sections. In some embodiments, the one or more user inputs include relative position and orientation of each subsequent track section and the central controller is configured to perform a curve-fitting technique in order to determine the curve of the track sections.

In some embodiments, the central controller is configured to use the angular misalignment to adjust control of the drive coils. For example, the central controller can determine phase offset for the phase of the drive coils (e.g., in electrical degrees or radians). In some embodiments, the central controller is configured to implement an observer control scheme and uses the angular misalignment to adjust the observer control scheme. In some embodiments, the central controller is configured to adjust velocity and position parameters that are used for display, actual control, or simulation, in order to account for the angular misalignment. In some embodiments, the central controller is configured to perform a diagnostics or fault detection technique based on the angular misalignment. In some embodiments, the central controller is configured to update or adjust a digital twin (e.g., a model of the track sections and mover) based on the angular misalignment.

Advantageously, correcting for the angular misalignment can improve controls of the track sections, especially around curved track portions. The angular misalignment can also improve control and data reporting of the linear drive system by improving accuracy of the measured position and velocity of the mover or of a digital twin of the mover.

### System Overview

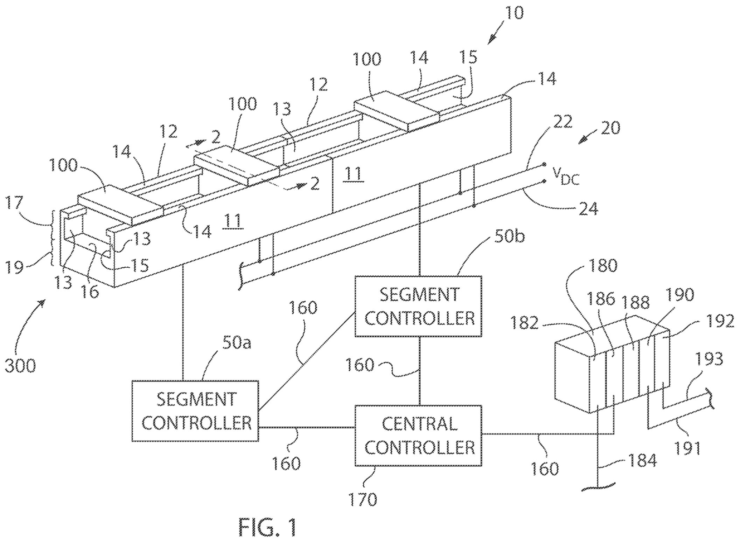

Referring to FIGS. 1-4, a transport system (e.g., a linear drive system 300, an induction drive system, etc.) for moving articles or products includes a track 10 having multiple segments 12. In some embodiments, multiple segments 12 are coupled with each other and arranged end-to-end (e.g., serially) to define the overall track configuration. The segments 12 may be straight segments having generally the same length. In some embodiments, the segments 12 have various sizes, lengths, and shapes and can be coupled with each other to form the track 10 according to a desired shape (e.g., an elliptical path, a circular path, etc.). In some embodiments, track segments 12 may be coupled with each other to form a generally closed loop that supports one or more movers 100 (e.g., carts, trains, vehicles, movable blocks, etc.) that are movable along the track 10. The track 10 is illustrated in a horizontal plane. For convenience, the horizontal orientation of the track 10 shown in FIG. 1 will be discussed herein. Terms such as upper, lower, inner, and outer will be used with respect to the illustrated track orientation. These terms are relational with respect to the illustrated track and are not intended to be limiting. It is understood that the track may be installed in different orientations, such as sloped or vertical, and include different shaped segments including, but not limited to, straight segments, inward bends, outward bends, up slopes, down slopes and various combinations thereof. The width of the track 10 may be greater in either the horizontal or vertical direction according to application requirements. The movers 100 will travel along the track and take various orientations according to the configuration of the track 10 and the relationships discussed herein may vary accordingly.

According to some embodiments, each track segment 12 includes an upper portion 17 and a lower portion 19. The upper portion 17 is configured to couple with (e.g., slidably, translatably, etc.) and support the movers 100, according to some embodiments. In some embodiments, the lower portion 19 is configured to house one or more control elements. In some embodiments, the upper portion 17 includes a generally u-shaped channel 15 extending longitudinally along the upper portion 17 of each segment. The channel 15 includes a bottom surface 16 and a pair of side walls 13, according to some embodiments. In some embodiments, each side wall 13 includes a rail 14 extending along an upper edge of the side wall 13. The bottom surface 16, side walls 13, and rails 14 may extend longitudinally along the track segment 12 and define a guideway along which the movers 100 travel. In some embodiments, the surfaces of the channel 15 (i.e., the bottom surface 16, side walls 13 and rails 14) are planar surfaces made of a low friction material along which movers 100 may slide. In some embodiments, the contacting surfaces of the movers 100 may also be planar and made of a low friction material. In some embodiments, the surface may be, for example, nylon, Teflon^{®}, aluminum, stainless steel, etc. In some embodiments, the contacting surfaces of the movers 100 are provided as a slidable bearing which may degrade over time. In some embodiments, the hardness of the surfaces on the track segment 12 are greater than the contacting surface of the movers 100 such that the contacting surfaces of the movers 100 wear faster than the surface of the track segment 12. In some embodiments, the contacting surfaces of the movers 100 may be removably mounted to the housing 11 of the mover 100 such that they may be replaced if the wear exceeds a predefined amount. In some embodiments, the movers 100 may include low-friction rollers to engage the surfaces of the track segment 12. The low-friction rollers may include bearings. In some embodiments, the surfaces of the channel 15 may include different cross-sectional forms with the mover 100 including complementary sectional forms. In some embodiments, the track segment 12 and mover have other combinations of shapes and construction such that the mover 100 can interface with (e.g., rest upon, hang upon, etc.) the track segments 12 and travel along the track segments 12.

In some embodiments, each mover 100 is configured to slide along the channel 15 as it is propelled by a linear drive system 300. The mover 100 includes a body 102 configured to fit within the channel 15, according to some embodiments. The body 102 includes a lower surface 106, configured to engage the bottom surface 16 of the channel, and side surfaces 108 configured to engage the side walls 13 of the channel, according to some embodiments. In some embodiments, the mover 100 further includes a shoulder 105 extending inward from each of the side surfaces 108. In some embodiments, the shoulder 105 has a width equal to or greater than the width of the rail 14 protruding into the channel. In some embodiments, a neck of the mover extends upward to a top surface 104 of the body 102. In some embodiments, the neck extends for the thickness of the rails such that the top surface 104 of the body 102 is generally parallel with the upper surface 32 of each rail 14. In some embodiments, the mover 100 further includes a platform 110 secured to the top surface 104 of the body 102. In some embodiments, the platform 110 is generally square and the width of the platform 110 is greater than the width between the rails 14. In some embodiments, the lower surface 114 of the platform 110, an outer surface of the neck, and an upper surface of the shoulder 105 define a channel 115 in which the rail 14 runs. In some embodiments, the channel 115 serves as a guide to direct the mover 100 along the track. In some embodiments, one or more platforms or attachments of various shapes may be secured to the top surface 104 of the body 102. Further, various workpieces, clips, fixtures, and the like may be mounted on the top 112 of each platform 110 for engagement with a product to be carried along the track by the mover 100. The platform 110 and any workpiece, clip, fixture, or other attachment present on the platform may define, at least in part, a load present on the mover 100.

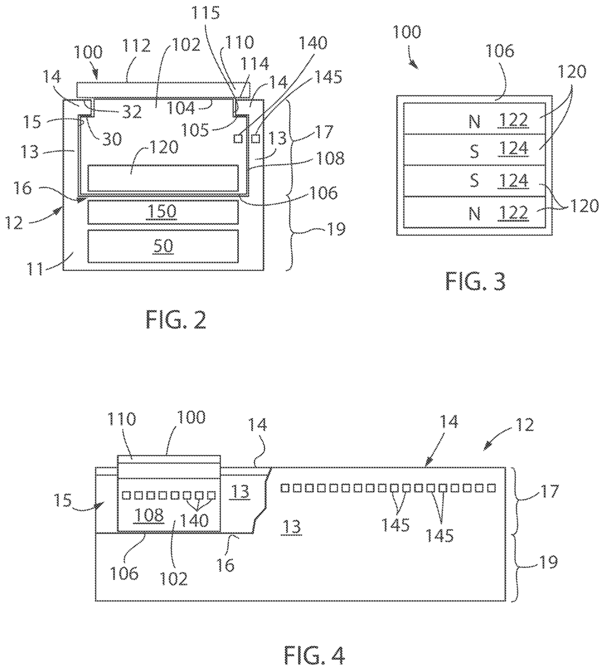

The mover 100 is induced or driven to move (e.g., travel) along the track 10 by a linear drive system 300, according to some embodiments. The linear drive system 300 is incorporated in part on each mover 100 and in part within each track segment 12, according to some embodiments. One or more drive magnets 120 are mounted to each mover 100. With reference to FIG. 3, the drive magnets 120 are arranged in a block on the lower surface of each mover. The drive magnets 120 include positive magnet segments 122, having a north pole, N, facing outward from the mover and negative magnet segments 124, having a south pole, S, facing outward from the mover, according to some embodiments. In some embodiments, two positive magnet segments 122 are located on the outer sides of the set of magnets and two negative magnet segments 124 are located between the two positive magnet segments 122. In some embodiments, the positive and negative motor segments are placed in an alternating configuration. In some embodiments, a single negative magnet segment 124 may be located between the positive magnet segments 122. Various other configurations of the drive magnets 120 may be utilized according to some embodiments. In some embodiments, the positive magnet segments 122 are half-width magnets while the negative magnet segments 124 are full width magnets. While FIG. 3 illustrates a single cycle magnet array, the mover 100 may also or alternatively be driven to move along the track 10 by drive magnets 120 arranged in a two cycle array (e.g., a stack of magnets alternating between full north pole N magnets and half segment south pole S magnets).

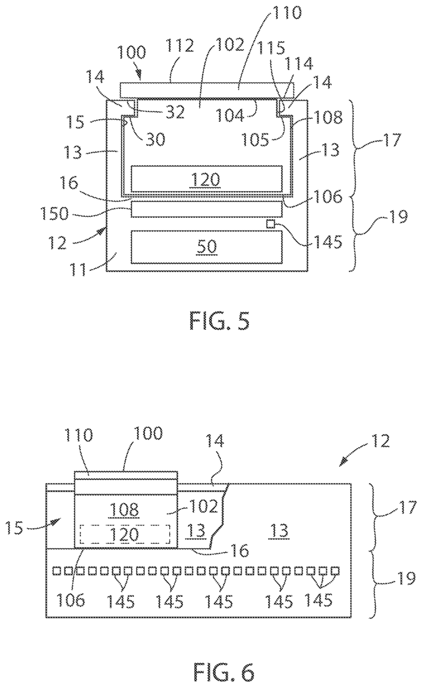

The linear drive system 300 further includes a series of coils 150 spaced along the length of the track segment 12. With reference also to FIG. 5, the coils 150 may be positioned within a housing 11 for the track segment 12 and below the bottom surface 16 of the channel 15. The coils 150 are energized sequentially according to the configuration of the drive magnets 120 present on the movers 100. The sequential energization of the coils 150 generates a moving electromagnetic field that interacts with the magnetic field of the drive magnets 120 to propel each mover 100 along the track segment 12.

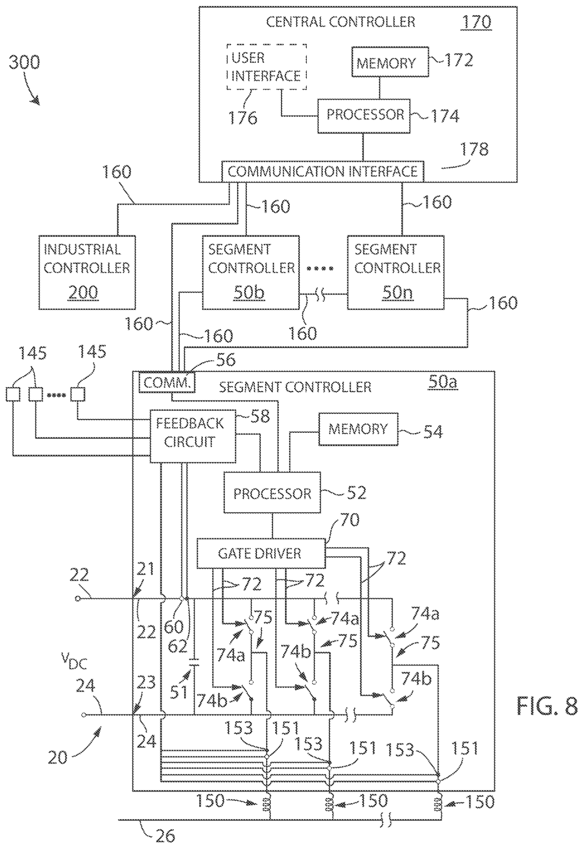

A segment controller 50 is provided within each track segment 12 to control the linear drive system 300 and to achieve the desired motion of each mover 100 along the track segment 12. Although illustrated in FIG. 1 as blocks external to the track segments 12, the arrangement is to facilitate illustration of interconnects between controllers. As shown in FIG. 2, it is contemplated that each segment controller 50 may be mounted in the lower portion 19 of the track segment 12. A first segment controller 50 a is shown with a first track segment, and a second segment controller 50 b is shown with a second track segment. It is contemplated that any number "n" of segment controllers 50 n (see FIG. 8) may be included in the linear drive system 300. Each segment controller 50 is in communication with a central controller 170 which is, in turn, in communication with an industrial controller 200. The industrial controller 200 may be, for example, a programmable logic controller (PLC) configured to control elements of a process line stationed along the track 10. The process line may be configured, for example, to fill and label boxes, bottles, or other containers loaded onto or held by the movers 100 as they travel along the line. In other embodiments, robotic assembly stations may perform various assembly and/or machining tasks on workpieces carried along by the movers 100. The exemplary industrial controller 200 includes: a power supply 182 with a power cable 184 connected, for example, to a utility power supply; a communication module 186 connected by a network medium 160 to the central controller 170; a processor module 188; an input module 190 receiving input signals 191 from sensors or other devices along the process line; and an output module 192 transmitting control signals 193 to controlled devices, actuators, and the like along the process line. The processor module 188 may identify when a mover 100 is required at a particular location and may monitor sensors, such as proximity sensors, position switches, or the like to verify that the mover 100 is at a desired location. The processor module 188 transmits the desired locations of each mover 100 to a central controller 170 where the central controller 170 operates to generate commands for each segment controller 50.

With reference also to FIG. 8, the central controller 170 includes a processor 174 and a memory device 172. It is contemplated that the processor 174 and memory device 172 may each be a single electronic device or formed from multiple devices. The processor 174 may be a microprocessor. In some embodiments, the processor 174 and/or the memory device 172 may be integrated on a field programmable gate array (FPGA) or an application specific integrated circuit (ASIC). The memory device 172 may include volatile memory, non-volatile memory, or a combination thereof. An optional user interface 176 may be provided for an operator to configure the central controller 170 and to load or configure desired motion profiles for the movers 100 on the central controller 170. In some embodiments, the configuration may be performed via a remote device connected via a network and a communication interface 178 to the central controller 170. It is contemplated that the system controller 170 and user interface 176 may be a single device, such as a laptop, notebook, tablet or other mobile computing device. In some embodiments, the user interface 176 may include one or more separate devices such as a keyboard, mouse, display, touchscreen, interface port, removable storage medium or medium reader and the like for receiving information from and displaying information to a user. In some embodiments, the system controller 170 and user interface may be an industrial computer mounted within a control cabinet and configured to withstand harsh operating environments. In some embodiments, still other combinations of computing devices and peripherals may be utilized or incorporated into the system controller 170 and user interface 176.

The central controller 170 includes one or more programs stored in the memory device 172 for execution by the processor 174. The system controller 170 receives a desired position from the industrial controller 200 and determines one or more motion profiles for the movers 100 to follow along the track 10. A program executing on the processor 174 is in communication with each segment controller 50 on each track segment via a network medium 160. The system controller 170 may transfer a desired motion profile to each segment controller 50. In some embodiments, the system controller 170 may be configured to transfer the information from the industrial controller 200 identifying one or more desired movers 100 to be positioned at or moved along the track segment 12, and the segment controller 50 may determine the appropriate motion profile for each mover 100.

A position feedback system provides knowledge of the location of each mover 100 along the length of the track segment 12 to the segment controller 50. According to some embodiments, illustrated in FIGS. 2 and 4, the position feedback system includes one or more position magnets 140 mounted to the mover 100 and an array of sensors 145 spaced along the side wall 13 of the track segment 12. The sensors 145 are positioned such that each of the position magnets 140 are proximate to the sensor as the mover 100 passes each sensor 145. The sensors 145 are a suitable magnetic field detector including, for example, a Hall Effect sensor, a magneto-diode, an anisotropic magnetoresistive (AMR) device, a giant magnetoresistive (GMR) device, a tunnel magnetoresistance (TMR) device, fluxgate sensor, or other microelectromechanical (MEMS) device configured to generate an electrical signal corresponding to the presence of a magnetic field. The magnetic field sensor 145 outputs a feedback signal provided to the segment controller 50 for the corresponding track segment 12 on which the sensor 145 is mounted. The feedback signal may be an analog signal provided to a feedback circuit 58 which, in turn, provides a signal to the processor 52 corresponding to the magnet 140 passing the sensor 145.

According to some embodiments, illustrated in FIGS. 5 and 6, the position feedback system utilizes the drive magnets 120 as position magnets. Position sensors 145 are positioned along the track segment 12 at a location suitable to detect the magnetic field generated by the drive magnets 120. According to the illustrated embodiment, the position sensors 145 are located below the coils 150. In some embodiments, the position sensors 145 may be interspersed with the coils 150 and located, for example, in the center of a coil or between adjacent coils. According to still another embodiment, the position sensors 145 may be positioned within the upper portion 17 of the track segment 12 and near the bottom surface 16 of the channel 15 to be aligned with the drive magnets 120 as each mover 100 travels along the tracks segment 12.

The segment controller 50 also includes a communication interface 56 that receives communications from the central controller 170 and/or from adjacent segment controllers 50. The communication interface 56 extracts data from the message packets on the industrial network and passes the data to a processor 52 executing in the segment controller 50. The processor may be a microprocessor. In some embodiments, the processor 52 and/or a memory device 54 within the segment controller 50 may be integrated on a field programmable gate array (FPGA) or an application specific integrated circuit (ASIC). It is contemplated that the processor 52 and memory device 54 may each be a single electronic device or formed from multiple devices. The memory device 54 may include volatile memory, non-volatile memory, or a combination thereof. The segment controller 50 receives the motion profile or desired motion of the movers 100 and utilizes the motion commands to control movers 100 along the track segment 12 controlled by that system controller 30.

Each segment controller 50 generates switching signals to generate a desired current and/or voltage at each coil 150 in the track segment 12 to achieve the desired motion of the movers 100. The switching signals 72 control operation of switching devices 74 for the segment controller 50. According to the illustrated embodiment, the segment controller 50 includes a dedicated gate driver module 70 which receives command signals from the processor 52, such as a desired voltage and/or current to be generated in each coil 150, and generates the switching signals 72. In some embodiments, the processor 52 may incorporate the functions of the gate driver module 70 and directly generate the switching signals 72. The switching devices 74 may be a solid-state device that is activated by the switching signal, including, but not limited to, transistors, thyristors, or silicon-controlled rectifiers.

According to the illustrated embodiment, the track receives power from a distributed DC voltage. A DC bus 20 receives a DC voltage, VDC, from a DC supply and conducts the DC voltage to each track segment 12. The illustrated DC bus 20 includes two voltage rails 22, 24 across which the DC voltage is present. The DC supply may include, for example, a rectifier front end configured to receive a single or multi phase AC voltage at an input and to convert the AC voltage to the DC voltage. It is contemplated that the rectifier section may be passive, including a diode bridge or, active, including, for example, transistors, thyristors, silicon-controlled rectifiers, or other controlled solid-state devices. Although illustrated external to the track segment 12, it is contemplated that the DC bus 20 would extend within the lower portion 19 of the track segment. Each track segment 12 includes connectors to which either the DC supply or another track segment may be connected such that the DC bus 20 may extend for the length of the track 10. In some embodiments, each track segment 12 may be configured to include a rectifier section (not shown) and receive an AC voltage input. The rectifier section in each track segment 12 may convert the AC voltage to a DC voltage utilized by the corresponding track segment.

The DC voltage from the DC bus 20 is provided at the input terminals 21, 23 to a power section for the segment controller. A first voltage potential is present at the first input terminal 21 and a second voltage potential is present at the second input terminal 23. The DC bus extends into the power section defining a positive rail 22 and a negative rail 24 within the segment controller. The terms positive and negative are used for reference herein and are not meant to be limiting. It is contemplated that the polarity of the DC voltage present between the input terminals 21, 23 may be negative, such that the potential on the negative rail 24 is greater than the potential on the positive rail 22. Each of the voltage rails 22, 24 are configured to conduct a DC voltage having a desired potential, according to application requirements. According to some embodiments, the positive rail 22 may have a DC voltage at a positive potential and the negative rail 24 may have a DC voltage at ground potential. In some embodiments, the positive rail 22 may have a DC voltage at ground potential and the negative rail 24 may have a DC voltage at a negative potential. According to some embodiments, the positive rail 22 may have a first DC voltage at a positive potential with respect to the ground potential and the negative rail 24 may have a second DC voltage at a negative potential with respect to the ground potential. The resulting DC voltage potential between the two rails 22, 24 is the difference between the potential present on the positive rail 22 and the negative rail 24.

It is further contemplated that the DC supply may include a third voltage rail 26 having a third voltage potential. According to some embodiments, the positive rail 22 has a positive voltage potential with respect to ground, the negative rail 24 has a negative voltage potential with respect to ground, and the third voltage rail 26 is maintained at a ground potential. In some embodiments, the negative voltage rail 24 may be at a ground potential, the positive voltage rail 22 may be at a first positive voltage potential with respect to ground, and the third voltage rail 26 may be at a second positive voltage potential with respect to ground, where the second positive voltage potential is approximately one half the magnitude of the first positive voltage potential. With such a split voltage DC bus, two of the switching devices 74 may be used in pairs to control operation of one coil 150 by alternately provide positive or negative voltages to one the coils 150.

The power section in each segment controller 50 may include multiple legs, where each leg is connected in parallel between the positive rail 22 and the negative rail 24. According to the illustrated embodiment, three legs are shown. However, the number of legs may vary and will correspond to the number of coils 150 extending along the track segment 12. Each leg includes a first switching device 74 a and a second switching device 74 b connected in series between the positive rail 22 and the negative rail 24 with a common connection 75 between the first and second switching devices 74 a, 74 b. The first switching device 74 a in each leg may also be referred to herein as an upper switch, and the second switching device 74 b in each leg may also be referred to herein as a lower switch. The terms upper and lower are relational only with respect to the schematic representation and are not intended to denote any particular physical relationship between the first and second switching devices 74 a, 74 b. The switching devices 74 include, for example, power semiconductor devices such as transistors, thyristors, and silicon controlled rectifiers, which receive the switching signals 72 to turn on and/or off. Each of switching devices may further include a diode connected in a reverse parallel manner between the common connection 75 and either the positive or negative rail 22, 24.

The processor 52 also receives feedback signals from sensors providing an indication of the operating conditions within the power segment or of the operating conditions of a coil 150 connected to the power segment. According to the illustrated embodiment, the power segment includes a voltage sensor 62 and a current sensor 60 at the input of the power segment. The voltage sensor 62 generates a voltage feedback signal and the current sensor 60 generates a current feedback signal, where each feedback signal corresponds to the operating conditions on the positive rail 22. The segment controller 50 also receives feedback signals corresponding to the operation of coils 150 connected to the power segment. A voltage sensor 153 and a current sensor 151 are connected in series with the coils 150 at each output of the power section. The voltage sensor 153 generates a voltage feedback signal and the current sensor 151 generates a current feedback signal, where each feedback signal corresponds to the operating condition of the corresponding coil 150. The processor 52 executes a program stored on the memory device 54 to regulate the current and/or voltage supplied to each coil and the processor 52 and/or gate driver module 70 generates switching signals 72 which selectively enable/disable each of the switching devices 74 to achieve the desired current and/or voltage in each coil 150. The energized coils 150 create an electromagnetic field that interacts with the drive magnets 120 on each mover 100 to control motion of the movers 100 along the track segment 12.

In operation, the load may vary on a mover 100 as the mover travels along the track. As previously discussed, the mover 100 includes a platform 110 secured to the top surface 104 of the body 102 of the mover 100. It is contemplated that platforms or attachments of various shapes may be secured to the top surface 104 of the body 102. Further, various workpieces, clips, fixtures, and the like may be mounted on the top of each platform 110 for engagement with a product to be carried along the track by the mover 100. The platform 110 and any workpiece, clip, fixture, or other attachment present on the platform may define, at least in part, a load present on the mover 100. For a given system, each mover 100 may have the same platform and/or attachments to uniformly interact with identical product being loaded on and off the mover 100. The product may constitute an additional load and may vary at different locations along a track. For example, a mover 100 may initially have no additional load present. At a first station, a container, such as a box, bottle, or the like may be loaded on to the mover 100. At a second station, product may be partially or fully loaded into the container. At additional stations, steps, such as additional loading, closing, labeling, and the like may be taken that further alter the load present on each mover. At a final station, the load may be removed and the mover 100 returns to the initial station. According to the exemplary application, the load varies along each section of track after additional packaging and/or product is placed on the mover 100. In addition, wear or damage on contacting surfaces, bearings, and the like may cause variations in the loading between movers 100 or variations in loading for a single mover over time.

In order to optimize performance of the linear drive system 300, it is desirable to characterize loads present on the movers 100 at various locations along the track. According to some embodiments, the segment controller 50 may be configured to provide a characterization of a load present on each mover 100 as it travels along the corresponding track segment 12. The mover 100 is initially positioned at a point of interest along a track segment 12. The expected load to be present on the mover 100 may also be included on the mover. For example, if a container and/or product is present on the mover 100 during operation, an appropriate container and/or product may be loaded on the mover 100 prior to characterization. As will be discussed in more detail below, the segment controller 50 then executes a characterization module to obtain a frequency response corresponding to performance of a mover 100 at a location and with an expected load. In some embodiments, the segment controller 50 may sample data and transmit stored data to the central controller 170 or to another remote processing device to obtain the frequency response corresponding to performance of the mover 100 at a location and with an expected load.

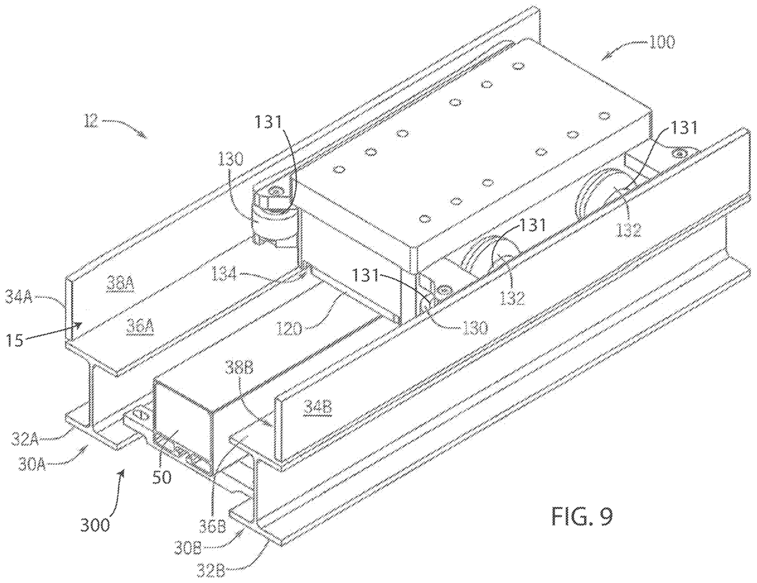

Referring to FIG. 9, the mover 100 may include wheels 130, 132 configured to roll along one or more surfaces (e.g., both a horizontal surface and a vertical surface). For example, a first set of wheels 130 may mounted horizontally and configured to engage inner, vertical surfaces 38A and 38B of rails 30A and 30B of the track segments 12 (e.g., on guiding segments 34A and 34B of rails 30A and 30B). A second set of wheels 132 may be mounted vertically and configured to engage inner, horizontal surfaces 36A and 36B of each of the rails 30A and 30B. In some embodiments, the two sets of wheels 132 are used to align the mover 100 within the channel 15 of the track segment 12 as the mover 100 travels along the track 10. In some embodiments, only one set of wheels 132 are used to facilitate transportation of the mover 100 along the track 10. In some embodiments, the wheels 132 and 130 each include a corresponding bearing 131 that is configured to facilitate improved rotation of the wheels 132 and 130.

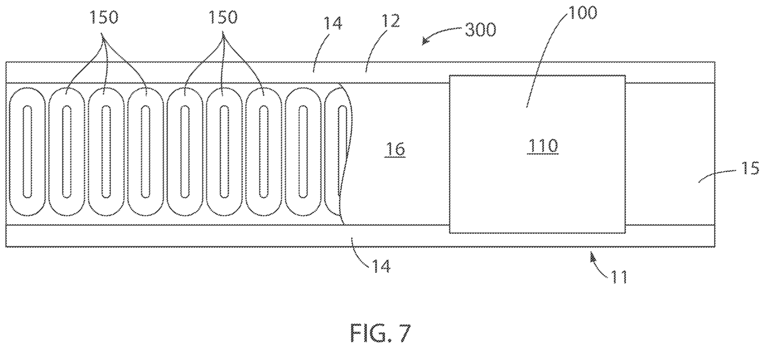

Referring to FIGS. 1-9, the track 10, the linear drive system 300, a control system for the linear drive system 300, any of the movers 100 of the linear drive system 300, or any diagnostic techniques for the linear drive system 300 may be the same as or similar to U.S. Application No. 15/702,983, now U.S. Patent No. 11,165,372 B2, U.S. Application No. 15/710,977, now U.S. Patent No. 10,442,637 B2, U.S. Application No. 16/015,699, now U.S. Patent No. 10,432,117 B1, U.S. Application No. 15/701,578, now U.S. Patent No. 10,562,715 B2, and/or U.S. Application No. 17/355,714, the entire disclosures of all of which are incorporated by reference herein.

### Speed Limit System

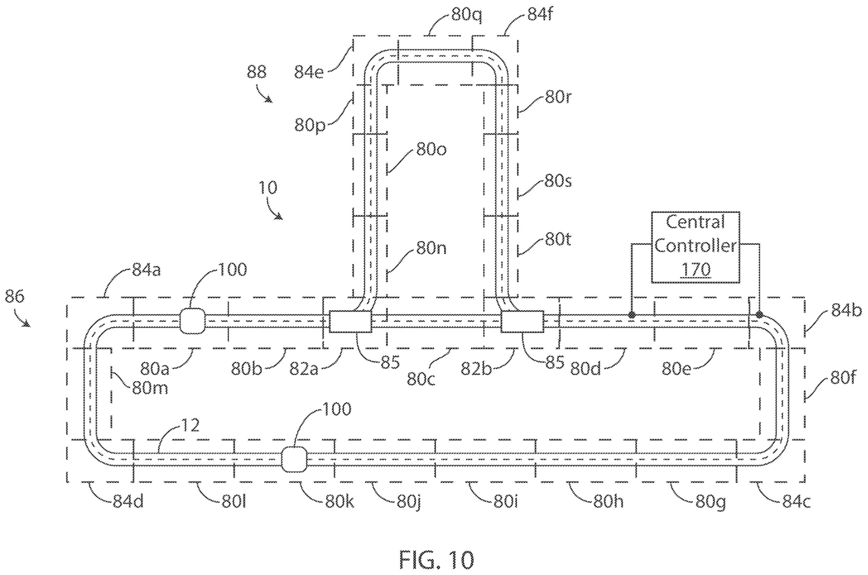

Referring to FIG. 10, among others, the track 10 includes multiple track segments 12 including straight segments 80, corner or curved segments 84, and junction segments 82, according to some embodiments. The straight segments 80, the curved segments 84, and the junction segments 82 interlock with each other in order to define the track 10. The junction segments 82 join two or more track segments 12 and include junction members 85, according to some embodiments. The junction members 85 are operable between various positions or states (e.g., physical or electromagnetic) in order to direct movers 100 between various track segments 12 or along different paths.

The track 10 can include a first path 86 (i.e., the lower loop shown in FIG. 10) defined by curved segment 84a, straight segment 80a, straight segment 80b, junction segment 82a straight segment 80c, junction segment 82b, straight segment 80d, straight segment 80e, curved segment 84b, straight segment 80f, curved segment 84c, straight segment 80g, straight segment 80h, straight segment 80i, straight segment 80j, straight segment 80k, curved segment 84d, and straight segment 80m (e.g., track segments 12). The track 10 can also include a second path 88 (i.e., the upper branch shown in FIG. 10) defined by junction segment 82a, straight segment 80n, straight segment 80o, straight segment 80p, curved segment 84e, straight segment 80q, curved segment 84f, straight segment 80r, straight segment 80s, straight segment 80t, and junction segment 82b. The junction segment 82a or the junction segment 82b can be operated between different positions or states to direct movers 100 along the first path 86 or the second path 88. It should be understood that the first path 86 and the second path 88 may be defined by more or fewer track segments 12 than shown. The first path 86 and the second path 88 are provided for illustrative purposes only and should not be understood as limiting. Further, the track 10 may include any configuration of paths and junction segments 82 to re-direct movers 100 between various paths. For example, the track 10 may include junction segments 82 that direct movers 100 between two, three, four, etc., other track segments and paths. The junction segments 82 define points at which track interconnected track segments 12 diverge or converge with each other to define various travel paths.

In some embodiments, the paths 86, 88, or other potential paths along the track 10 are at least partially overlapping such that a given mover 100 can be located on multiple paths at the same time. Similarly, a given track segment 12 can be part of multiple different paths. Multiple paths along the track 10 may converge or diverge at the junction segments 82 and may be defined by the planned (e.g., scheduled, predicted, programmed, etc.) route a given mover 100 will take along the track 10. Some paths may form closed loops (e.g., path 86), whereas other paths may form open or closed branches (e.g., path 88) that extend from other paths of the track 10. Advantageously, the speed limits imposed on a mover 100 may depend on the path of the mover (e.g., the predicted future location of the mover 100) and/or other attributes of the mover 100 (e.g., payload, weight, etc.) rather than being based exclusively on the particular track segment 12 on which the mover 100 is currently located.

Before discussing the speed limits in detail, it is noted that the term "upstream" as used herein refers to a location along the track 10 (e.g., a track segment 12 or portion of a track segment 12) which a given mover 100 passes through before reaching a "downstream" location along the track 10. For example, if the movers 100 travel in a generally clockwise direction along the track 10 from the perspective shown in FIG. 10, the straight segment 80b is located upstream of the junction member 85 and/or the junction segment 82a, whereas the straight segments 80n and 80c are located downstream of the junction member 85 and/or the junction segment 82a. Similarly, the portion of the junction segment 82a on which the mover is located immediately before reaching the junction member 85 is located upstream of the junction member 85, whereas the portion of the junction segment 82a on which the mover is located immediately after passing through the junction member 85 is located downstream of the junction member 85. For tracks 10 or paths which form closed loops, "upstream" and "downstream" locations relative to a given junction can be defined based on whether the location is closer to the upstream end(s) of the junction or closer to the downstream end(s) of the junction.

Each of the track segments 12 are associated with multiple speed limits. In particular, the junction segments 82 can be associated with speed limits corresponding to a predicted future path of one of the movers 100 approaching the junction segments 82. For example, the junction segment 82a or the straight segment 80b upstream of the junction segment 82a can be associated with both a first speed limit and a second speed limit. The first speed limit is used to control a rate of motion of movers 100 that are approaching the junction 82a and are predicted to travel along the second path 88 (e.g., to be diverted by the junction segment 82a to the straight segment 80n). The second speed limit is used to control the rate of motion of movers 100 that are approaching the junction 82a and are predicted to travel along the first path 86 (e.g., to pass straight through the junction segment 82a to the straight segment 80c). The values of the first speed limit and the second speed limit can be set or determined (e.g., by the central controller 170) based on a radius of curvature, an expected angular momentum, etc., that the movers 100 will experience when traveling over the junction segment 82a and being diverted to the second path 88 or to travel to the first path 86. The speed limits are applied to control the movers 100 based on the predicted future location of the movers 100 (e.g., whether the mover 100 is predicted to be diverted by the junction segment 82a to the straight segment 80n, or whether the mover 100 is predicted to pass straight through the junction segment 82a to the straight segment 80c).

The speed limits can be associated with and applied at track segments 12 (e.g., track sections) that are upstream of the junction segment 82a such that the rate of travel (e.g., rate of motion, speed, acceleration, or a derivative of position with respect to time that is higher than acceleration namely a "jerk limit") of the movers 100 is controlled before the movers 100 enter the junction segment 82a. Additionally or alternatively, the first and the second speed limits can be associated with and applied at the junction segments 82. Applying a different speed limit to control velocity, acceleration, or a jerk of the movers 100 based on which of multiple travel paths the movers 100 are predicted to travel along reduces a likelihood of the movers 100 tipping when being diverted by the junction segments 82 and improves throughput of the movers 100 on the track 10.

It should be understood that any number of speed limits can be associated with the track segments 10 upstream of the junction segments 82 corresponding to a number of potential routes or travel paths of the movers 100 exiting the junction segment 82. For example, a junction segment that is configured to divert the movers 100 between three paths (e.g., divert the movers 100 to the left, divert the movers 100 to the right, or allow the movers 100 to travel straight through) may include three speed limits having values corresponding to a radius of curvature of the three paths. In some embodiments, the speed limit applied for movers 100 that are passing straight through the junction segment 82 without being diverted along a curved track portion have a higher speed limit than speed limits applied for movers 100 that are predicted to be diverted by the junction segment 82. In particular, movers 100 that are not predicted to experience angular acceleration due to being diverted by the junction segment 82 (e.g., movers 100 that will travel straight through the junction segment 82) can be controlled to pass through the junction segment 82 at a higher velocity than movers 100 that will be diverted by the junction segment 82 to travel along a curved track section.

Referring still to FIG. 10, among others, the curved track segments 84, or track segments 12 upstream of the curved track segments 84 can be associated with multiple speed limits. The multiple speed limits can be used to control travel of the movers 100 based on a payload of the movers 100. For example, the straight track segment 801 that is upstream of the curved track segment 84d can include multiple speed limits corresponding to different payloads of movers 100. The speed limits can have values that are determined or set based on both values of payloads of movers 100 and a radius of curvature of the downstream curved track segment 84d. For example, a mover 100 with a larger payload may benefit from having a lower speed limit assigned when approaching and traveling around the curved track segment 84d in order to reduce a likelihood that the mover 100 will tip. The payload can include a weight of the mover 100, a size of the mover 100, or a quantity of product, contents, or components carried by the mover 100. The payload can also include a type of product that is carried by the mover 100. For example, a higher value product may be associated with a higher value of payload such that the mover 100 is operated according to a lower speed limit to reduce a likelihood of tipping or spilling the high value product.

The payload of the mover 100 can be determined or obtained by the central controller 170. The central controller 170 selects a speed limit for the mover 100 from the speed limits associated with the straight track segment 80l upstream of the curved track segment 84d based on the payload of the mover 100, according to some embodiments. The mover 100 can then be operated to travel along the curved track segment 84d and the straight track segment 80l upstream of the curved track segment 84d according to the selected speed limit. Advantageously, selecting and applying speed limits to control the rate of travel of movers 100 based on their payload when entering and traveling through curved track segments such as curved track segment 84d can reduce a likelihood of the mover 100 experiencing a tipping moment and reduce a likelihood of product that is carried by the mover 100 being flung from the mover 100. The speed limits based on the upcoming radius of curvature of the next track segment 12 and the payload of the movers 100 can be applied to control a velocity, acceleration, or jerk of the movers 100 prior to entering the curved track segment 84 and while traveling through the curved track segment 84. For example, the movers 100 may be decelerated as set by the speed limit at one or more track segments upstream of the curved track segment 84 in order to ensure that the movers 100 are decelerated in a controlled manner.

It should be understood that all of the track segments 12 of the track 10 can include multiple speed limits. The central controller 170 can track the movement of multiple movers 100 through the track 10 and apply speed limits as desired according to predicted future path of each mover 100 (e.g., when a mover is predicted to be diverted by the junction segments 82), and according to the payload of the movers 100 when approaching track segments 12 having a radius of curvature. Advantageously, the central controller 170 can control the travel of all of the movers 100 simultaneously according to the speed limits of the various track segments 12.

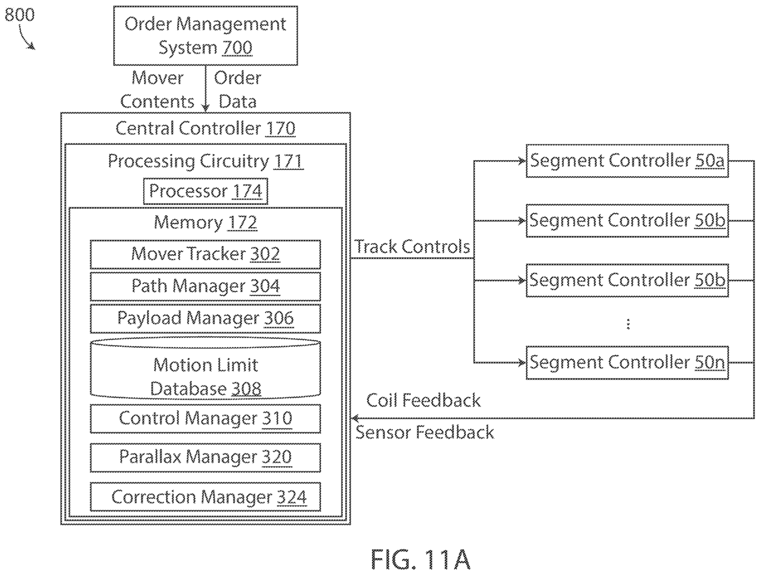

Referring to FIG. 11A, among others, a control system 800 for the linear drive system 300 includes the central controller 170 and the segment controllers 50. The control system 800 can also include an order management system 700. The central controller 170 includes processing circuitry including, the processor 174 and memory device 172. Processing circuitry 171 can be communicably connected to a communications interface such that processing circuitry 171 and the various components thereof can send and receive data via the communications interface. Processor 174 can be implemented as a general purpose processor, an application specific integrated circuit (ASIC), one or more field programmable gate arrays (FPGAs), a group of processing components, or other suitable electronic processing components.

The memory device 172 (e.g., memory, memory unit, storage device, etc.) can include one or more devices (e.g., RAM, ROM, Flash memory, hard disk storage, etc.) for storing data and/or computer code for completing or facilitating the various processes, layers and modules described in the present application. The memory device 172 can be or include volatile memory or non-volatile memory. The memory device 172 can include database components, object code components, script components, or any other type of information structure for supporting the various activities and information structures described in the present application. According to some embodiments, the memory device 172 is communicably connected to processor 174 via processing circuitry 171 and includes computer code for executing (e.g., by processing circuitry 171 and/or processor 174) one or more processes described herein. In some embodiments, the processing circuitry 171 can be circuitry of one or more of the segment controllers 150. For example, any of the functions described herein as being performed by the processing circuitry 171 can be performed locally in any of the segment controllers 150, or in a distributed manner by multiple segment controllers 150, in various embodiments of the present disclosure.

In some embodiments, central controller 170 is implemented within a single computer (e.g., one server, one housing, etc.). In various other embodiments central controller 170 can be distributed across multiple servers or computers (e.g., that can exist in distributed locations) such as on processing circuitry of a cloud computing system.

The central controller 170 can be configured to provide track controls to the segment controllers 50 to cause the segment controllers 50 to energize the coils 150 to drive motion (e.g., travel) of the movers 100. The central controller 170 is configured to receive feedback signals from the segment controllers 50 including coil feedback (e.g., feedback signals from the coils 150) and sensor feedback (e.g., feedback signals from the sensors 145), according to some embodiments.

The central controller 170 includes a mover tracker 302, a path manager 304, a payload manager 306, and a motion limit database 308, and a control manager 310, according to some embodiments. The mover tracker 302 is configured to track the location of movers through the track 10, according to some embodiments. The path manager 304 is configured to track or record a path for each of the movers 100 throughout the track 10, according to some embodiments. The payload manager 306 is configured to estimate or obtain a payload of the movers 100 for use in controlling the rate of travel of the movers 100 along the track 10. The motion limit database 308 is configured to store and apply speed, acceleration, or jerk limits, or more generally, rate of travel limits (e.g., speed limits) for various track segments 12. The control manager 310 is configured to use results of the mover tracker 302 (e.g., the locations of each of the movers 100 through the track 10), the path manager 304 (e.g., paths along which the movers 100 are predicted to travel, a future location of the movers 100, etc.), the payload manager 306 (e.g., estimated payload of the movers 100), and the motion limit database 308 (e.g., the speed limits, acceleration limits, or jerk limits for each track segment 12) in order to generate track controls for the movers 100 to control travel (e.g., rate of travel) of the movers 100. The control manager 310 can generate and provide track controls to the segment controllers 50 which the segment controllers 50 use to energize the coils 150 to induce travel of the movers 100.

The mover tracker 302 is configured to track a current location of each of multiple movers on the track 10, according to some embodiments. In some embodiments, each of the movers 100 has a unique identification. The mover tracker 302 can use coil feedback indicative of a signature of the movers 100 and track a current one of the track segments 12 at which the movers 100 are currently located. The mover tracker 302 can also use the sensor feedback to identify the location of the movers 100 along the track 10. The mover tracker 302 identifies the corresponding track segments 12 at which each of multiple movers 100 are currently located along the track 10, according to some embodiments. In some embodiments, the movers 100 include radio transceivers that are configured to emit signals or respond to wireless signals to report their positions on the track 10. The mover tracker 302 is configured to operate in real-time to track locations of the movers 100 along the track 10, according to some embodiments.

The path manager 304 is configured to maintain a database of path assignments for each of the movers 100, according to some embodiments. In some embodiments, the path manager 304 is configured to store various paths including information of the paths (e.g., which track segments 12 the paths are defined along), and identifications of which of the movers 100 are assigned to the paths. For example, a first set of the movers 100 may be assigned to a first path, a second set of the movers 100 may be assigned to a second path, etc. The paths can include information regarding which track segments 12 the movers 100 are approaching (e.g., a direction of travel and downstream track segments 12 that the movers 100 are moving towards).

The payload manager 306 is configured to determine a payload (e.g., a weight, a size, a number of contents or products that are transported by the movers 100, etc.) of each of the movers 100, according to some embodiments. The payload manager 306 can determine the payload of the movers 100 based on data obtained from a remote system or a fleet management system, shown as the order management system 700, indicating a number of products that are scheduled or ordered to be carried by each of the movers 100. The order management system 700 can receive, process, and schedule orders responsive to user inputs. For example, the payload manager 306 can obtain inventory data from a remote computing system, shown as the order management system 700, that manages product inventory management. The payload manager 306 can use the inventory data that indicates a number of products or contents of each mover 100 to estimate the payload of each mover 100. The payload manager 306 can also use the sensor feedback or the coil feedback obtained from the segment controllers 50 to estimate the payload of each of the movers 100. For example, the payload manager 306 can determine or track a degree of energization of the coils 150 and determine the payload based on a measured amount of movement of the movers 100 and the corresponding degree of energization of the coils 150.

The motion limit database 308 includes a mapping of the track segments 12 and associated speed limits, according to some embodiments. It should be understood that the speed limits can include limits for velocity, acceleration, or a higher order derivative of position than acceleration such as jerk. The motion limit database 308 can include a mapping of the track 10, including multiple speed limits for various track segments 12. The multiple speed limits can be variously included for different curved sections for movers 100 with different payloads. The speed limits for the movers 100 having different payloads can be applied based on the results of the payload manager 306. Similarly, various track segments 12 in the motion limit database 308 such as junction segments 82 can include multiple speed limits that are applied depending on which of multiple future positions or paths the mover 100 is predicted to travel along. In some embodiments, the database 308 includes multiple sub-limits for movers 100 that are applied based on both the predicted future position or paths of the movers 100, and also based on the payload of the movers 100. For example, the motion limit database 308 can include multiple sets of speed limits for the junction 82a corresponding to whether the mover 100 that is approaching the junction segment 82a is predicted to take a curved path along path 88, or a straight path along path 86. The set of speed limits for movers 100 that are predicted to take the curved path along path 88 may have multiple sub-sets of speed limits that can be selected and applied based on the payload of the mover 100. In some embodiments, movers 100 with a lighter payload that are approaching the junction segment 82a that are predicted to curve may have a lower speed limit value than movers 100 that are approaching the junction segment 82a and are predicted to travel straight through the junction segment 82a, but a higher speed limit value (e.g., less speed reduction) than movers 100 with heavier payloads that are predicted to curve along path 88. In this way, the payload-based speed limits and the predicted future path speed limits can be both used to apply appropriate speed limits for movers 100 having various payloads and predicted future paths.

The control manager 310 is configured to use the limits stored in the motion limit database 308, the current positions of the movers 100 as provided by the mover tracker 302, the predicted paths or future positions of the movers 100 as provided by the path manager 304, and the estimated or obtained payload (e.g., weight) of each mover 100 as provided by the payload manager 306, according to some embodiments. The control manager 310 generates track controls for the segment controllers 50 to operate, control, or limit motion of the movers 100 according to speed limits, according to some embodiments. The control manager 310 applies speed limits and controls movement of all of the movers 100 in real-time, according to some embodiments. For example, the control manager 310 can obtain the current position of each of the movers 100 from the mover tracker 302 as well as predicted future locations of the movers 100 from the path manager 304. The control manager 310 can query the motion limit database 308 for speed limits associated with the track segments 12 at which each of the movers 100 are currently located or about to travel onto. If the track segments 12 include multiple speed limits, the control manager 310 selects, from the motion limit database 308, an appropriate speed limit for each of the movers 100 based on the predicted future location or path of the movers 100 and based on the payload of the movers 100. The control manager 310 may generate track controls or setpoints for the segment controllers 50 according to the speed limits and provide the track controls to the segment controllers 50 such that the movers 100, when operated by the segment controllers 50, travel according to or at the speed limit (e.g., limited or reduced velocity, limited or reduced acceleration, or limited or reduced jerk). The control manager 310 is also configured to control operation of the junction members 85 to transition between various states or positions to divert movers 100 along their paths. In some embodiments, the junction members 85 include coils that, when energized, cause a track portion to move between different positions in order to provide a curved path or a straight path through the junction segments 82.

### Curve Correction

### Overview

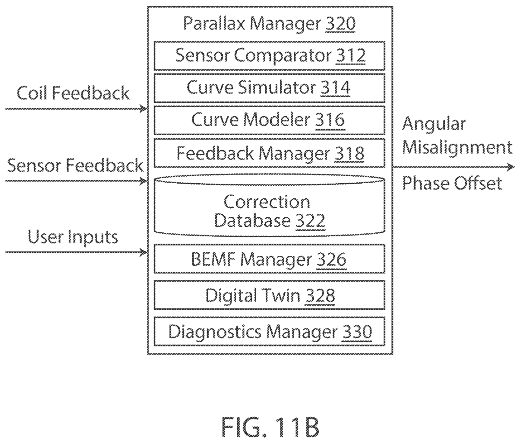

As shown in FIG. 11A and 11B, the memory device 172 also includes a parallax manager 320. The parallax manager 320 is configured to receive track data and determine an angular misalignment (e.g., angular offset) between the movers 100 and the track segments 12. The angular offset can be used in order to adjust thrust (e.g., control of the drive coils 150) to account for (e.g., compensate for) the angular misalignment, to adjust measured velocity of the movers 100 to account for (e.g., compensate for) the angular misalignment, to adjust detected position of the movers 100 to account for (e.g., compensate for) the angular misalignment, to determine or update a digital twin or simulation, etc. In some embodiments, the parallax manager 320 is configured to receive sensor feedback from the sensors 145, coil feedback from the drive coils 150, the track controls provided to the drive coils 150 (e.g., commanded current or energization of the drive coils 150) as the track data. The track data may include any of the sensor data or feedback obtained from the sensors 145, the coil feedback obtained from the drive coils 150, track controls provided to the drive coils 150, whether from actual operation or simulation of the linear drive system 300, and/or any configuration, orientation, or position data of various components of a model of the track.

For example, the parallax manager 320 can obtain sensor feedback and/or coil feedback from the segment controllers 50. In some embodiments, the parallax manager 320 is configured to use position feedback from the sensors 145 to identify location of the movers 100 and corrections in control of the movers 100 in order to account for parallax (e.g., angular misalignment between the movers 100 and the segments 12).

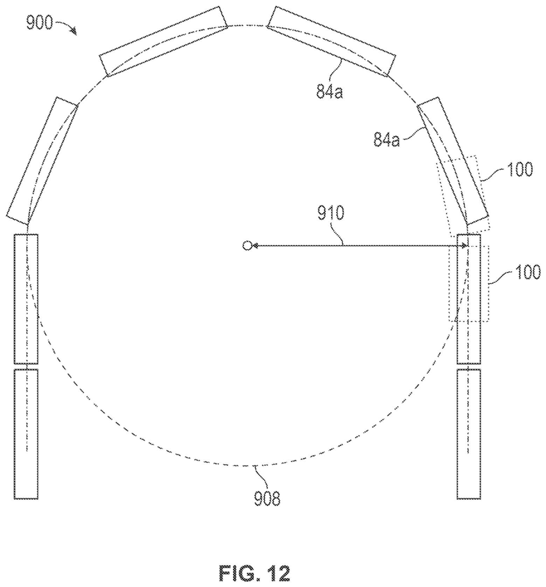

As shown in FIG. 12, a diagram 900 illustrates curved segments 84a and 84b (e.g., segments 84a and 84b that defined a curved travel path). The curved segments 84a and 84b are disposed along a portion of a circle 908 having a radius 910. When the mover 100 transports along the curved segments 84a and 84b, depending on the radius 910, a misalignment can occur between the mover 100 and the segments 84. Decreasing the radius 910 can result in an increased misalignment between the movers 100 and the segments 84. Therefore, around sharp turns having small radius, the misalignment may be most evident. It should be understood that references to curved or curvature of track segments as used herein can refer to a travel path of a mover that is defined by the track segments as the mover traverses the track segments. In some embodiments, the drive coils 150 are arranged linearly along corresponding track segments 12 (e.g., curved track segments 84a and 84b).

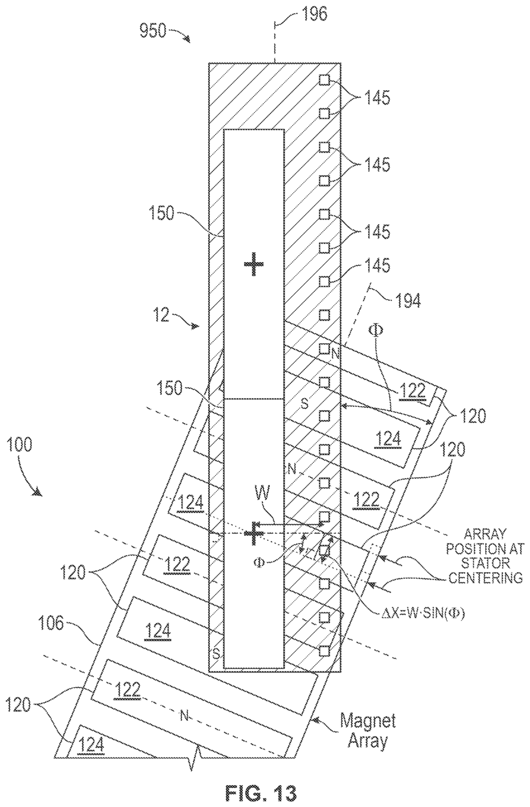

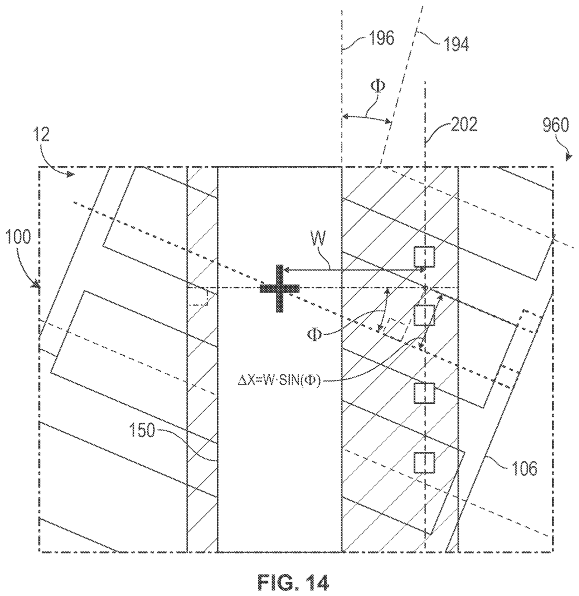

As shown in FIGS. 13 and 14, the mover 100 is shown traveling along a curved potion of the track 10. When the mover 100 transports along the curved portion, the mover 100 and the segment 12 are misaligned. As shown in FIGS. 13 and 14, the mover 100 has a longitudinal axis 194, and the segment 12 has a longitudinal axis 196. As the mover 100 approaches the coils 150 of the segment 12, the longitudinal axis 194 of the mover 100 is misaligned at an angle *ϕ* relative to the longitudinal axis 196 of the segment 12 (e.g., the coils 150). As shown in FIG. 14, the angular misalignment of *ϕ* between the longitudinal axis 194 of the mover 100 and the longitudinal axis 196 of the segment 12 results in a lateral offset w between a center of the coils 150 and the sensors 145. The lateral offset *w* can be a distance measured in a direction laterally along the track segment 12 (e.g., perpendicular to the longitudinal axis 196).

The lateral offset w between the center of the coils 150 and the sensors 145 (e.g., a centerline 202 of the sensors 145) can result in a longitudinal offset between the center of the coils 150 and the centerline 202 of the drive magnets 120, *Δx.* The longitudinal offset Δ*x* is measured along the longitudinal axis 194 of the mover 100. The longitudinal offset Δ*x* can be a "phase correction" to be corrected. The longitudinal offset Δ*x* can be determined using: $Δ x = w ⋅ sin \left(ϕ\right)$ where w is the lateral offset, and *ϕ* is the angular offset between the longitudinal axis 194 and the longitudinal axis 196.

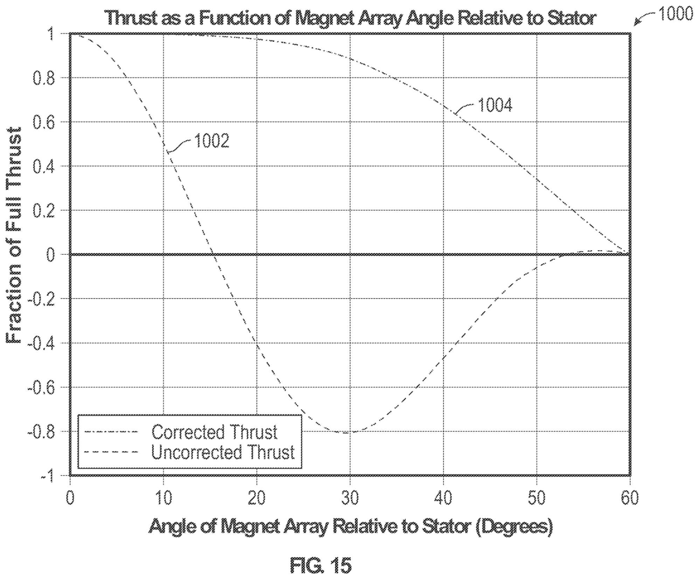

Referring to FIG. 15, a graph 1000 illustrates deleterious impact on thrust due to uncorrected longitudinal offset Δ*x* (e.g., phase correction). As shown in FIG. 15, series 1002 illustrates uncorrected thrust resulting from angular offset of the mover 100 and its magnets 120 relative to the coils 150. As illustrated by series 1002, the thrust exerted on the mover 100 can decrease with increased offset angle *ϕ* from 0 degrees to approximately 30 degrees. The thrust exerted on the mover 100 may even become negative, resulting in a braking force or deceleration applied to the mover 100. However, if the thrust is corrected in order to account for the angular offset *ϕ* by determining Δx and adjusting thrust to account for the offset *Δx,* the thrust can be improved and maintained positive as illustrated by series 1004.

Further, the sensors 145 may not account for lateral motion of the mover 100 along the track segments 12. Measured position and velocity of the mover 100 via the sensors 145 can be lower than actual position and velocity of the mover 100. The measured position and velocity of the mover 100 can be used in the feedback loop by the controller 170 which may result in sub-optimal thrust and control.

It should also be understood that while the description herein with reference to curve compensation refers to the central controller 170 as performing various functions, one or more or any of the functions described herein with reference to FIGS. 11A-22 may be performed by one or more of the segment controllers 50 locally. For example, segment controllers 50 may determine corresponding adjustments to their operation to account for curvature such that the central controller 170 commands movement and the segment controllers 50 implement any of the techniques described herein in order to effectuate the movement while accounting for curvature.

### Sensor Difference Comparison

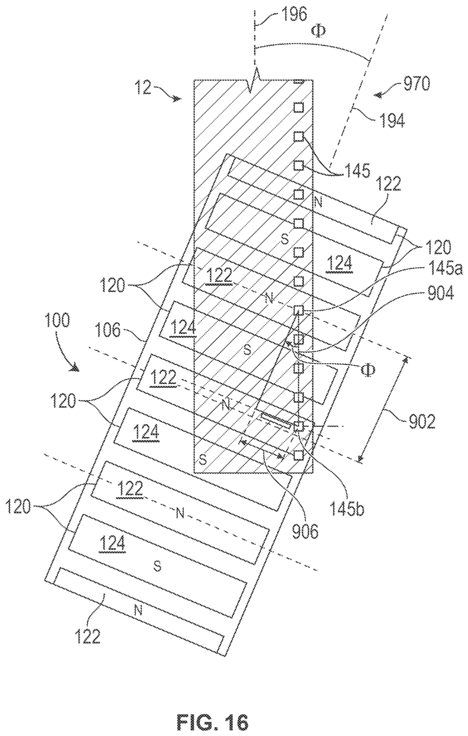

Referring to FIGS. 11A, 11B, and 16, the parallax manager 320 includes a sensor comparator 312. The sensor comparator 312 can be configured to determine an estimation of an angle of the mover 100 relative to the track segments 12 in order to compensate for angular offset. As shown in FIG. 16, the magnets 120 of the mover 100 are offset relative to the track segment 12 at an angle *ϕ*. Two sensors 145 of the track segment 12 that are a distance 904 along the along the track segment 12 (e.g., measured along the longitudinal axis 196) span a distance 902 across the mover 100 (e.g., measured along the longitudinal axis 194). The distance 902 across the mover 100 can be determined as L · *cos*(*ϕ*) where L is the distance 904 measured along the track segment 12 (e.g., measured along the longitudinal axis 196). The angle *ϕ* can be estimated (e.g., by the sensor comparator 312) using: ${ϕ}_{est} = {cos}^{- 1} \left(\frac{X}{L}\right)$ where X is a difference of positions reported by the two sensors 145 along which the distance 904 is measured.

The sensor comparator 312 can be configured to determine an average or weighted average from multiple sensors 145 in order to improve accuracy of the estimated angle *ϕ*. For example, the sensor comparator 312 can use Equation (2) to determine multiple estimates of the angle *ϕ* and average the estimates to improve accuracy of the estimated angle *ϕ*. In some embodiments, the sensor comparator 312 is configured to obtain the feedback from the sensors 145 and determine, based on each combination of two of the sensors 145, estimates of the angle *ϕ* and average the estimates to determine an averaged angle. The estimated angle *ϕ* can be used by the control manager 310 with Equation (1) in order to determine correction for the angle *ϕ*. In some embodiments, the results of Equation (2) and Equation (1) can be used to correct for the angle *ϕ* if a sign of the angle *ϕ* is known.

In some embodiments, the sensors 145 are spaced apart such that vertical fields emitted from the sensors 145 are spaced a quarter cycle apart (e.g., in quadrature) in order to track positions of the movers 100. The angular offset *ϕ* between the mover 100 and the track segments 12 (e.g., between the drive coils 150 and the magnets 120) can result in a second harmonic error in the sensed positions provided by the sensors 145. In some embodiments, the further apart the sensors 145 are, the larger an error of the resulting estimation of the angular offset *ϕ* is. In order to compensate for the various magnitude of errors that result from using different pairs of sensors 145 to estimate the angle *ϕ*, the sensor comparator 312 can compensate the estimated values of the angle *ϕ* (e.g., *ϕₑₛₜ*), by adding a value of *L* · (1 - cos(*ϕ*)) to the estimated angle *ϕ*. In some embodiments, the value of *L ·* (1 - cos(*ϕ*)) is multiplied by the angle *ϕ*.

In some embodiments, the sensor comparator 312 is also configured to correct velocity and position before providing the velocity and position of the movers 100 to the control loop implemented by the control manager 310. For example, the sensor comparator 312 can determine actual velocity of the mover 100 based on velocity measured by the sensors 145 as ${V}_{actual} = \frac{{V}_{measured}}{cos \left(ϕ\right)}$ where *ϕ* is the estimated angular offset determined using Equation (2), and *V_{measured}* is the velocity of the movers 100 measured by the sensors 145. In some embodiments, the sensor comparator 312 can correct the position of the movers 100 before being used by the control manager 310 in the feedback loop by numerically integrating a length of the curved path based on the shape of the curve and a position of the drive coils 150 along the path. In some embodiments, the sensor comparator 312 is configured to use an interpolated lookup table to convert measured position to actual position for use by the control manager 310 in the feedback control loop.

### Curve Motion Simulation

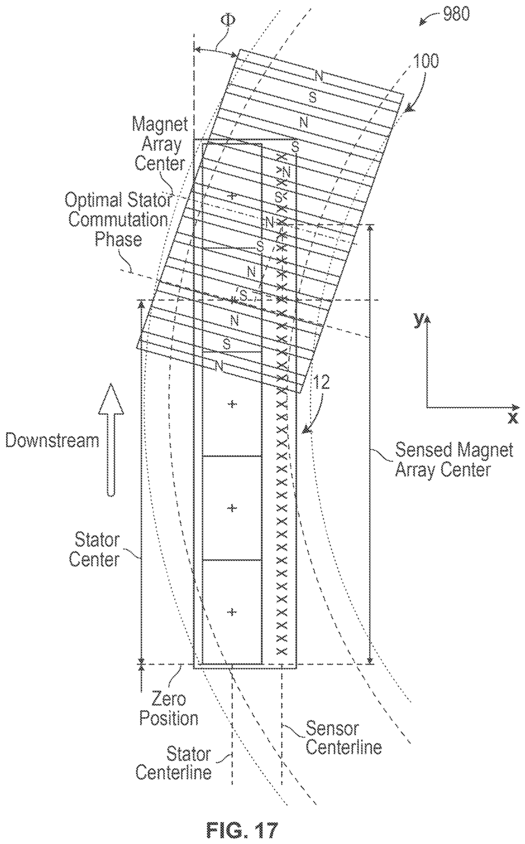

Referring to FIGS. 11A, 11B, and 17, the parallax manager 320 includes a curve simulator 314. The curve simulator 314 can implement a simulation of the mover 100 moving along the track 10 in order to estimate the angle *ϕ* and sign (e.g., direction of curvature). The estimated angle *ϕ* of the mover 100 relative to the track 10 can be used by the control manager 310 in Equation (1) to determine the compensation *Δx* in order to account for the angle *ϕ*.

In some embodiments, a user may specify the path of the magnet array (e.g., magnets 120) on the stator. For example, the user may provide, to the curve simulator 314, various curved paths selected from curve models such as circles, ellipses, Bezier curves, or splines. In some embodiments, the curve simulator 314 receives a CAD model of the track 10. The curve simulator 314 is configured to simulate motion of the mover 100 along the track 10 and estimate (e.g., by the simulation), the average drive phase for each track segment 12. In some embodiments, the curve simulator 314 determines the angle *ϕ* of the mover 100 (e.g., the magnet array, magnets 120, etc.) relative to the track segments 12 (e.g., relative to the longitudinal axis 196 of the drive coils 150) using, for example, Equation (2). In some embodiments, the curve simulator 314 can determine the phase correction Δ*x* for the control manager 310 using, for example, Equation (1). In some embodiments, the curve simulator 314 is configured to determine an optimal value of the average drive phase using a numerical integration along two dimensions (e.g., both x and y directions as shown in FIG. 17). In some embodiments, the curve simulator 314 is configured to export values of the phase difference to a table to be included in software code and/or configuration.

Advantageously, simulating movement of the mover 100 along the track 10 provides high accuracy of correction may be achieved and a variety of geometrics of curved paths can be supported. On the other hand, the user specified vehicle path needs to be incorporated into the simulation and curves of fixed radius need to be pre-generated. A different table is compiled for every curve on every track, which could be cumbersome to have unique code or table versions/files generated for each motor on a curved path.

### Automatic Curve Model

Referring to FIGS. 11A, 11B, and 18-20, the curve modeler 316 is configured to determine corrections for driving the mover 100 via the drive coils 150 by assuming curve shapes. In some embodiments, the curve modeler 316 is configured to receive location and angle of each track segment 12 from a user (e.g., provided via a user interface). In some embodiments, the curve modeler 316 is configured to determine a curve between the various track segments 12 using the location and angle of each track segment 12. For example, the curve modeler 316 can determine curved paths using circles, ellipses, Bezier curves, Euler spirals, splines, etc. In some embodiments, the curve modeler 316 is configured to use splines and the defined position and angle of each track segment 12 in order to determine the paths for the movers 100 along the track 10. The curve modeler 316 can then provide the paths for the movers 100 to the curve simulator 314 in order to simulate motion of the mover 100 along the track 10 and to determine required phase adjustments *Δx* along the track 10.

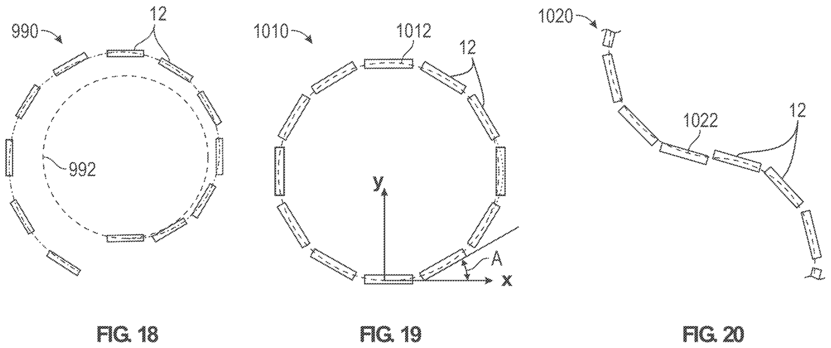

FIG. 18 includes a diagram 990 that illustrates the use of cubic splines in order to approximate a curved path 992 with a changing radius. As shown in FIG. 18, the track segments 12 are disposed in a changing radius path, and the curve modeler 316 approximates the path 992 using cubic splines. The curve modeler 316 can use the position and angle of each of the track segments 12, as provided by the user, in order to determine the path 992 using cubic splines.

FIG. 19 includes a diagram 1010 that illustrates the use of cubic splines in order to approximate a curved path 1012 with a constant radius. As shown in FIG. 19, the track segments 12 are disposed in a constant radius path, and the curve modeler 316 approximates the path 1012 using cubic splines. The curve modeler 316 can use the position and angle of each of the track segments 12, as provided by the user, in order to determine the path 1012 using cubic splines.

FIG. 20 includes a diagram 1020 that illustrates the user of cubic splines in order to approximate a curved path 1022 with inflection points where a center of curvature changes. As shown in FIG. 20, the track segments 12 are disposed in a changing inflection point path, and the curve modeler 316 approximates the path 1022 using cubic splines. The curve modeler 316 can use the position and angle of each of the track segments 12, as provided by the user, in order to determine the path 1022 using cubic splines. As shown in FIGS. 18-20, the use of cubic splines can provide high accuracy to the track segments 12.

Referring to FIGS. 11A, 11B, and 19, the curve modeler 316 and the curve simulator 314 can implement a simulation based on the input positions and angles of the track segments 12. For example, for the track segments 12 shown in FIG. 19, it can be assumed that the mover 100 when transporting along the track segments 12 will be colinear with the track segments 12 when the mover 100 is longitudinally centered on the track segments 12 (e.g., the zero position). In some embodiments, the curve modeler 316 and the curve simulator 314 can receive, from the user, a non-zero angle when the mover 100 is centered on the track segments 12. The curve modeler 316 can use a first track segment 12 centered at an origin with an angle of 0 degrees (i.e., the track segment 12 at which the x-y axes intersect). An angle A may be defined between the first track segment 12 and a next track segment. The curve modeler 316 uses a cubic polynomial having the form: $y = {ax}^{3} + {bx}^{2} + cx + d$ where *d* = 0, *a* is a first constant, *b* is a second constant, and c is a third constant. The curve modeler 316 can determine a slope of the curve such that the slope matches the angle A of the adjacent (e.g., the next) track segment 12. The slope can be determined using Equation (4) shown below. $m \left(x\right) = \frac{dy}{dx} = 3 {ax}^{2} + 2 bx + c$

In some embodiments, the curve modeler 316 is configured to use the angle A of the next track segment 12 relative to the firs track segment 12 using: $a = \frac{\left(tan\left(A\right)-2\frac{y}{x}\right)}{{x}^{2}}$ $b = \frac{tan \left(A\right)}{2 x} - \frac{3}{2} xa$ $c = - 3 {x}^{2} a - 2 xb$ It should be understood that Equations (5)-(7) above assume that the mover is colinear with the track segments 12. However, the curve modeler 316 may use modified versions of Equations (5)-(7) that account for angulation of the mover 100 relative to the track segments 12.

Advantageously, for the assumed curve models, the central controller 170 can implement simulations while only requiring the user to provide initial position of the first track segment 12 and angles of the subsequent track segments 12. In some embodiments, the curves of the mover 100 as determined by the curve modeler 316 can be used for display on a display screen. Advantageously, cubic splines can provide high accuracy to the physical track segments 12. The control manager 310 can use the results of the simulation performed by the curve simulator 314 to determine appropriate phase corrections Δ*x* and control the segments controllers 50 to induce motion of the movers 100 while accounting for the phase corrections *Δx.*

### Field Sensor Measurement

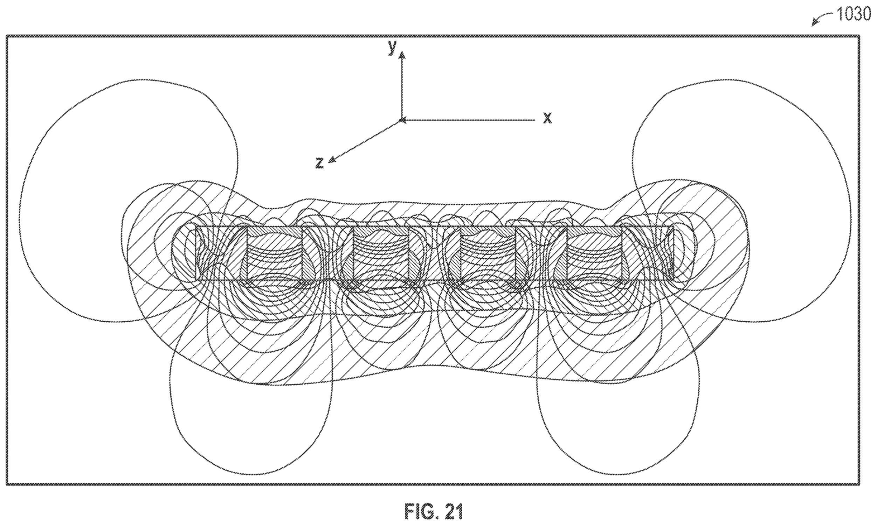

Referring to FIGS. 11A, 11B, and 21, the central controller 170 can be configured to detect back electromotive force ("BEMF") from the track segments 12 as the mover 100 travels along the track 10. The central controller 170 can obtain sensor feedback from the sensors 145. In some embodiments, when one of the movers 100 travels along a straight track segment 12, the field from the magnets 120 (e.g., the magnet array) is approximately sinusoidal. The field from the magnets 120 may extend in two directions as shown in FIG. 21. The x-direction as shown in FIG. 21 is the longitudinal direction of the mover 100 whereas the y-direction is the lateral direction of the mover 100. The z-direction can be the vertical direction of the mover 100. In some embodiments, the field in the lateral direction (e.g., the y-direction) is smaller than the field in the longitudinal direction (e.g., the x-direction).

In some embodiments, when the magnets 120 are at an angle *θ* relative to the track segment 12 along which the mover 100 is currently traveling, a portion of the magnetic field in the longitudinal direction (e.g., the x-direction) becomes lateral. For example, the magnetic field in the lateral direction (e.g., the y-direction) can be determined using: ${B}_{y} = {B}_{x} sin \left(ϕ\right)$ where *θ* is the angle of the mover 100 relative to the track segment 12, ***Bₓ*** is the magnetic field in the longitudinal direction and ***B_{y}*** is the magnetic field in the lateral direction.

In some embodiments, the feedback manager 318 can receive sensor feedback from the sensors 145 indicating magnitude of the magnetic field of the magnets 120 in multiple directions (e.g., in the x-direction, the y-direction, and the z-direction). The feedback manager 318 can estimate the angle *ϕ* using: ${ϕ}_{estimated} = {sin}^{- 1} \frac{{B}_{y}}{{B}_{x}}$ where ***B_{y}*** is the magnetic field detected by the sensors 145 in the lateral direction, *Bₓ* is the magnetic field detected by the sensors 145 in the longitudinal direction, and *ϕ_{estimated}* is the estimated value of the angle *ϕ* (e.g., as shown in at least FIG. 16). Detection of the magnetic field in the z-direction (e.g., the vertical direction) can be used in order to position of the movers 100. It should be understood that the Equation 9 used by the feedback manager 318 to estimate the value of the angle *ϕ* can be determined based on the ratio between the amplitude or strength of the magnetic field detected by the sensors 145 between the amplitude in the lateral direction and at least one of the vertical direction or the longitudinal direction.

In some embodiments, the sensors 145 are configured to measure magnetic fields in two axes or three axes. For example, the sensors 145 can be 2-axis and/or 3-axis Hall effect sensors or magneto-resistive sensors. In some embodiments, if the track 10 is equipped with sensors 145 that can measure magnetic fields in multiple directions, knowledge of geometry of the track 10 is not needed in order to determine (e.g., via the feedback manager 318) the angle *ϕ* and to determine phase correction (e.g., Δ*x* using Equation 1). Advantageously, the cost of installing sensors 145 that are configured to measure magnetic fields in multiple directions may be minimal. In some embodiments, the sensors 145 can detect low lateral field noise from the drive coils 150. In some embodiments, the feedback manager 318 can compensate or filter the low lateral field noise from the drive coils 150 using a filter and based on commanded operation of the drive coils 150. For example, the lateral fields exerted by the drive coils 150 can be predicted based on the commanded operation of the drive coils 150 in order to filter or compensate the obtained sensor feedback from the sensors 145 for the lateral fields exerted by the drive coils 150. In some embodiments, the drive coils 150 are operated when an edge of the array of magnets 120 is moving away from the sensors 145 because the magnets 120 do not create lateral fields near the edge.

Referring still to FIGS. 11A, 11B, and 21, the feedback manager 318 can be configured to obtain sensor feedback from the sensors 145 and populate a database (e.g., a table) of path positions and phase correction angles (*ϕ*). In some embodiments, the feedback manager 318 records BEMF feedback from the drive coils 150 and/or the sensors 145. For example, when one of the movers 100 are moving along the track 10 (e.g., along a curve), the feedback manager 318 can measure and record the BEMF from the drive coils 150 and store the BEMF in a correction database 322 with associated position data (e.g., position of the mover 100 along the track 10).

### Back-EMF

Referring to FIGS. 11A and 11B, the parallax manager 320 includes a BEMF manager 326. The BEMF manager 326 is configured to determine, based on the BEMF detected at the drive coils 150, the angular misalignment (i.e., *ϕ*) between the mover 100 and the track segments 12. The BEMF manager 326 can compare the detected BEMF from the drive coils 150 to expected BEMF signals were the mover 100 moving along a straight track segment (e.g., the angular misalignment *ϕ* being equal to zero). Based on the comparison and using a relationship, lookup table, set of equations, etc., the BEMF manager 326 can determine the angular misalignment *ϕ*.

In some embodiments, inverters used to energize the drive coils 150 can be capable of tracking the back-EMF in real-time as the movers 100 are move along the track 10. In some embodiments, closed-loop control is used to energize the drive coils 150 using pulse width modulation (PWM). In some embodiments, for small angles of the track segments 12, the mover 100 can be commanded, during a testing procedure, to move the mover 100 at a constant velocity. The drive coils 150 can periodically be transitioned by the central controller 170 and the segment controllers 50 to transition into a low state (e.g., shut off, reducing the energization of the drive coils 150, etc.), effectively shorting the windings of the drive coils 150. In this way, the drive coils 150 can be intermittently shorted and feedback from the drive coils 150 (e.g., BEMF) can be measured by the BEMF manager 326. The central controller 170 can receive feedback signals (e.g., currents) from the drive coils 150 in order to estimate back-EMF produced by the drive coils 150 as the movers 100 travel along the track segments 12 as the drive coils 150 are shorted.

For large angles of curvature (e.g., sharp curves), uncorrected propulsion by the drive coils 150 can be insufficient to propel the vehicle 10 in order to automatically obtain the back-EMF. In such cases, the movers 100 can be moved by hand (e.g., manually) along the portions of the track while the central controller 170 obtains sensor feedback from the sensors 145 in order to track position along the track 10, and also obtains feedback from the drive coils 150 in order to estimate the back-EMF. In this way, the mover 100 can be transported along the track 10 both automatically by the drive coils 150 and also manually as needed. The central controller 170 can therefore obtain back-EMF readings or estimations for the entirety of the track 10 in order to generate corrections for operation of the drive coils 150.

In some embodiments, the central controller 170 (e.g., the BEMF manager 326) can be configured to use inductance, resistance, voltage, and speed in order to determine the back-EMF. In some embodiments, the central controller 170 is configured to determine alignments for various Q-axis currents of the drive coils 150 in order to maximize efficiency and thrust capability.

In some embodiments, the real-time back-EMF tracking implemented by the BEMF manager 326 is used as a one-time data gathering to create a table of path positions versus phase correction angles. In some embodiments, the table of path positions versus phase correction angles may be continuously updated with more recently acquired data as the control manager 310 operates the movers 100 along the track 10. In some embodiments, the table is updated only when the velocity of the mover is sufficient to create quality back-EMF data. For example, the BEMF manager 326 can obtain, from the drive coils 150, the back-EMF from the drive coils 150 and store the back-EMF data in the correction database 322. Additionally or alternatively, the BEMF manager 326 can convert the BEMF data to angular misalignments *ϕ* or phase corrections for the drive coils 150 along the track 10 and store the angular misalignments *ϕ* or phase corrections in the correction database 322.

In some embodiments, the BEMF manager 326 is configured to determine the angular misalignments *ϕ* between the mover 100 and the track segments 12 by energizing the drive coils 150 and detecting BEMF from the drive coils 150 without intermittently shorting the drive coils 150. In particular, the drive coils 150 can provide back-EMF which may be proportional to the speed of the movers 100. If the movers 100 are driven to travel at a sufficient speed (e.g., at at least a threshold speed), the back-EMF can be obtained from the drive coils 150 without requiring intermittent shorting of the drive coils 150. In some embodiments, the BEMF manager 326 is configured to use the inductance, resistance, voltage, and speed to determine the back-EMF. In some embodiments, the BEMF manager 326 is configured to use the back-EMF obtained from the drive coils 150 as a one-time data gathering step (e.g., a learning mode) in order to create a phase correction versus position table that can be stored in the correction database 322. In some embodiments, the BEMF manager 326 is configured to continuously receive the back-EMF, determine updates to the phase corrections, and update the phase correction versus position table stored in the correction database 322. In some embodiments, the BEMF manager 326 only uses back-EMF to update the correction database 322 if the back-EMF is of a sufficient quality (e.g., if the speed of the mover 100 is greater than the threshold). In some embodiments, the BEMF manager 326 is configured to use the back-EMF in real-time to determine corrections for the drive coils 150 (e.g., the phase).

### Phase Correction

Referring still to FIGS. 11A and 11B, the correction manager 324 is configured to provide the angular misalignment *ϕ* to the control manager 310, and the control manager 310 is configured to adjust the phase of the drive coils 150 based on the angular misalignment *ϕ*. For example, the control manager 310 can determine the phase correction *Δx* based on the angular misalignment *ϕ* using Equation (1) and can generate, for the corresponding drive coils 150, control signals to activate the drive coils 150 according to the phase correction *Δx.* Advantageously, using the phase correction *Δx* improves the thrust of the mover 100 and compensates for the offset that can occur between the magnet array (e.g., the magnets 120) of the mover 100 and the drive coils 150 of the track segments 12 due to the angular misalignment *ϕ*. In some embodiments, the phase correction *Δx* for the drive coils 150 can be converted to an angle using $Δ θ = \frac{Δ x}{l} 2 π$ where *l* is a cycle length of the drive coils 150 and Δ*θ* is the phase offset in angular degrees.

### Position and Velocity Correction

Referring to FIGS. 11A and 11B, the control manager 310 can be configured to use the angular misalignment *ϕ* to determine corrections for detected position or velocity. In some embodiments, the position and velocity of the movers 100 are used in feedback control loops or to operate a display (e.g., to notify a fleet manager regarding the movers 100). In some embodiments, position and velocity tracking of the movers 100 is performed in a coordinate system of the track segments 12 (e.g., along the longitudinal axis 196). In some embodiments, the control manager 310 is configured to correct the velocity measured by the sensors 145 using: $v = \frac{{v}_{measured}}{cos ϕ}$ where *v* is the compensated or adjusted velocity of the mover 100, *v_{measured}* is the velocity of the mover as measured by the sensors 145, and *ϕ* is the angular misalignment. The control manager 310 can use the compensated or adjusted velocity *v* of the mover 100 in feedback control loops for operation of the drive coils 150.

In some embodiments, the control manager 310 is also configured to determine corrections for the position of the mover 100 as detected by the sensors 145. For example, the control manager 310 or the correction manager 324 may numerically integrate a curve path based on known curve shape of the track 10 and the angular misalignment *ϕ*. The control manager 310 and/or the correction manager 324 can store a database of the curve path (e.g., in tabular form). The control manager 310 and/or the correction manager 324 can convert measured position to actual position by performing an interpolation using the database.

### Observer Control Scheme

In some embodiments, the control manager 310 is configured to implement an observer control scheme to operate the drive coils 150. In some embodiments, the control manager 310 is configured to use modified feedback functions for the observer control scheme that account for the angular misalignment *ϕ*.

When there is angular misalignment *ϕ* between the mover 100 and the track segments 10, a sinusoidal field detected by the sensors 145 that is a quarter of a cycle (e.g., 90 degrees) apart may no longer be in quadrature. In particular, instead of the signals from neighboring sensors being 90 degrees apart, the signals may only be 90 cos *ϕ* apart. This difference can result in a second harmonic of position error occurring, and may also result in an associated velocity error.

The observer control scheme can include using a measured position *x* (e.g., as obtained from the sensors 145) and an estimated position *x̂*. In some embodiments, the observer control scheme includes calculating an error using: *e* = sin(x - *x̂*). The observer control scheme can be modified to account for the angular misalignment *ϕ*. In particular, instead of using *x̂*, the observer control scheme can use $\hat{x} + \frac{ϕ}{2}$. For example, instead of sin *x̂* and cos *x̂,* the observer control scheme can use $sin \left(\hat{x}+\frac{ϕ}{2}\right)$ and $cos \left(\hat{x}+\frac{ϕ}{2}\right)$ In some embodiments, the error for the observer control scheme is modified to account for the angular misalignment *ϕ* and is determined using: $e = sin \left(x+\frac{ϕ}{2}\right) cos \left(\hat{x}-\frac{ϕ}{2}\right) - cos \left(x+\frac{ϕ}{2}\right) sin \left(\hat{x}-\frac{ϕ}{2}\right) = cos \left(ϕ\right) sin \left(x-\hat{x}\right)$ where *ϕ* is the angular misalignment, *x* is the measured position, and *x̂* is the estimated position.

### Digital Twin

Referring still to FIGS. 11A and 11B, the parallax manager 320, or more generally, the central controller 170 can implement a simulation using a digital twin 328, according to some embodiments. The digital twin 328 can include models of the movers 100 and the track 10. In some embodiments, the digital twin 328 can be updated in real-time and can be displayed on a display screen or user interface (e.g., the user interface 176) in order to provide the user feedback regarding the position, speed, etc., of the movers 100 on the track 10. The digital twin 328 can be updated based on the determined corrections for the position, velocity, etc., of the movers 100, the adjusted or compensated operation of the drive coils 150, etc. In some embodiments, the digital twin 328 is used to implement one or more simulations or what-if scenarios. For example, the digital twin 328 can be adjusted by the user via the user interface 176 in order to determine the operation of the movers 100 and impact on the linear drive system 300 that one or more adjustments to control schemers thereof may have. In some embodiments, the central controller 170 is configured to update or adjust the digital twin 328 using the angular misalignment in order to improve accuracy of the digital twin 328.

### Diagnostics Manager

As shown in FIG. 11B, the parallax manager 320 can include a diagnostics manager 330, according to some embodiments. In some embodiments, the diagnostics manager 330 is configured to use the angular misalignment *ϕ* to implement fault detection for the movers 100 or the track 10. In some embodiments, the diagnostics manager 330 is configured to use the offset Δ*x* to implement fault detection for the movers 100 or the track 10. For example, the diagnostics manager 330 can report the detected angular misalignment *ϕ* or the offset Δ*x* to the user or system manager (e.g., administrator).

### Method

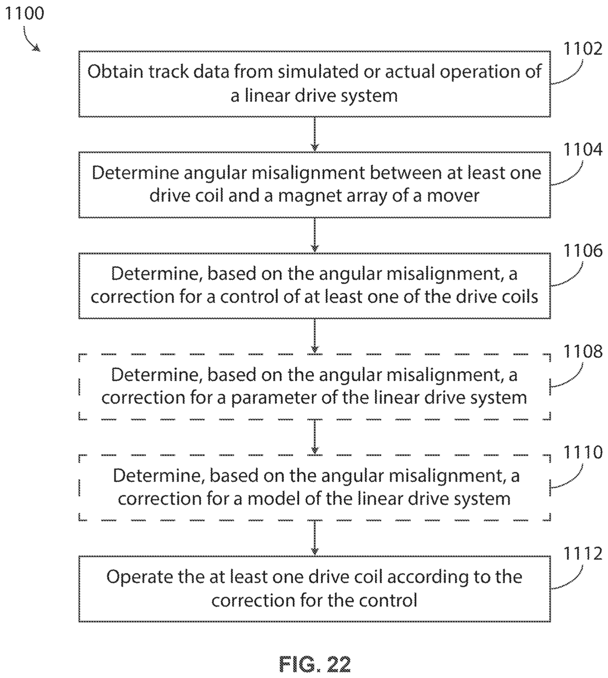

As shown in FIG. 22, a flow diagram of a method 1100 for operating the track 10 (e.g., the drive coils 150) includes steps 1102-1112, according to some embodiments. The method 1100 can be performed by the linear drive system 300, or more particularly, by the central controller 170. In some embodiments, the central controller 170 is configured to perform one or more portions of the method 1100 in order to determine and compensate for curves of the track 10 that cause angular misalignments between a magnet array of the movers 100 and the drive coils 150.

The method 1100 includes obtaining track data from simulated or actual operation (e.g., movement) of a linear drive system (step 1102), according to some embodiments. In some embodiments, the track data includes any of the sensor data or feedback obtained from the sensors 145, the coil feedback obtained from the drive coils 150, track controls provided to the drive coils 150, whether from actual operation or simulation of the linear drive system 300, and/or any configuration, orientation, or position data of various components of a model of the track. In some embodiments, the track data is obtained from sensor or drive coil feedback of actual operation of a linear drive system (e.g., by operating the linear drive system 300). The track data can also be obtained from performing a simulation of the linear drive system 300 (e.g., using a model of the track 10).

The method 1100 includes determining angular misalignment between at least one drive coil and a magnet array of a mover (step 1104), according to some embodiments. In some embodiments, the angular misalignment is an angle defined between the longitudinal axis 194 of the mover 100 (e.g., the magnet array of the mover) and the longitudinal axis 196 of the track segments 12 (e.g., the drive coil 150). The angular misalignment can be determined using any of the techniques described in greater detail above with reference to FIGS. 11A-21 to determine the angular misalignment *ϕ*. In some embodiments, the angular misalignment is determined using back-electromotive force that is determined based on feedback obtained from one or more of the drive coils 150 as the mover 100 is induced to move along the track 10. For example, the back-electromotive force can be obtained during a time period when the drive coils 150 are intermittently shorted or during a time period over which the drive coils 150 are continuously energized such that the mover 100 travels at at least a threshold speed. In some embodiments, the angular misalignment is determined based on a comparison between sensor feedback obtained from a first of the sensors 145 and a second of the sensors 145. In some embodiments, the angular misalignment is determined based on a simulation of the mover 100 along the track. The simulation can be performed based on user-input curves of the track 10, or based on assumed curves of the track using user-input position and relative angular orientation of subsequent track sections 12 (e.g., using cubic splines to determine the curves of the track 10). In some embodiments, the angular misalignment is determined based on a ratio of magnetic field strengths detected at various axes of a multi-axis sensor 145.

The method 1100 also includes determining, based on the angular misalignment, a correction for a control of at least one of the drive coils (step 1106), according to some embodiments. In some embodiments, the correction for the control of the drive coils 150 is an adjustment to a phase of the drive coils 150. For example, the step 1106 can include determining an angular adjustment (e.g., in electrical degrees) to adjust the activation of the drive coils 150 according to the adjustment to the phase. The method 1100 can also include operating the at least one drive coil according to the correction for the control (step 1112), according to some embodiments. In some embodiments, the step 1112 includes operating the drive coils 150 according to the correction for the control determined in step 1106. The step 1112 can result in the movers 100 being induced to move along the track 10.

The method 1100 includes determining, based on the angular misalignment, a correction for a parameter of the linear drive system (step 1108), according to some embodiments. In some embodiments, step 1108 includes determining a correction for a position or velocity of the movers 100 or a correction for a simulated position or velocity of the movers 100. For example, velocity of the movers 100 measured by the sensors 145 can be adjusted using the angular misalignment in order to determine corrected velocity. Likewise, detected position of the movers 100 can be corrected using the angular misalignment. The simulated position or velocity of a simulation can similarly be corrected using the angular misalignment. In some embodiments, the corrected position or velocity of the movers 100 are used in a feedback control loop or in a simulation of the track 10.

The method 1100 includes determining, based on the angular misalignment, a correction for a model of the linear drive system (step 1110), according to some embodiments. In some embodiments, step 1110 includes determining a correction or update for a digital twin (e.g., the digital twin 328) or simulation of the track 10. The digital twin can include a model of the track 10 and the movers 100. The step 1110 can include using any of the determined corrections for the parameters and/or the correction for the control of the at least one of the drive coils to update the model (e.g., the digital twin). In some embodiments, the digital twin is provided to a user via a display screen or user interface (e.g., user interface 176). The user or system administrator may interact with the central controller 170 and the linear drive system 300 via the digital twin. For example, the digital twin can provide real-time feedback as to current operation (e.g., mover position and speed) of the track 10. In some embodiments, the digital twin can be used to implement what-if scenarios or simulations such that the user is provided with feedback as to the impact that adjustments to control parameters may have on the linear drive system 300.

### Configuration of the Exemplary Embodiments

As utilized herein with respect to numerical ranges, the terms "approximately," "about," "substantially," and similar terms generally mean +/- 10% of the disclosed values. When the terms "approximately," "about," "substantially," and similar terms are applied to a structural feature (e.g., to describe its shape, size, orientation, direction, etc.), these terms are meant to cover minor variations in structure that may result from, for example, the manufacturing or assembly process and are intended to have a broad meaning in harmony with the common and accepted usage by those of ordinary skill in the art to which the subject matter of this disclosure pertains. Accordingly, these terms should be interpreted as indicating that insubstantial or inconsequential modifications or alterations of the subject matter described and claimed are considered to be within the scope of the disclosure as recited in the appended claims.

It should be noted that the term "exemplary" and variations thereof, as used herein to describe various embodiments, are intended to indicate that such embodiments are possible examples, representations, or illustrations of possible embodiments (and such terms are not intended to connote that such embodiments are necessarily extraordinary or superlative examples).

The term "coupled" and variations thereof, as used herein, means the joining of two members directly or indirectly to one another. Such joining may be stationary (e.g., permanent or fixed) or moveable (e.g., removable or releasable). Such joining may be achieved with the two members coupled directly to each other, with the two members coupled to each other using a separate intervening member and any additional intermediate members coupled with one another, or with the two members coupled to each other using an intervening member that is integrally formed as a single unitary body with one of the two members. If "coupled" or variations thereof are modified by an additional term (e.g., directly coupled), the generic definition of "coupled" provided above is modified by the plain language meaning of the additional term (e.g., "directly coupled" means the joining of two members without any separate intervening member), resulting in a narrower definition than the generic definition of "coupled" provided above. Such coupling may be mechanical, electrical, or fluidic.

References herein to the positions of elements (e.g., "top," "bottom," "above," "below") are merely used to describe the orientation of various elements in the FIGURES. It should be noted that the orientation of various elements may differ according to other exemplary embodiments, and that such variations are intended to be encompassed by the present disclosure.

The hardware and data processing components used to implement the various processes, operations, illustrative logics, logical blocks, modules and circuits described in connection with the embodiments disclosed herein may be implemented or performed with a general purpose single- or multi-chip processor, a digital signal processor (DSP), an application specific integrated circuit (ASIC), a field programmable gate array (FPGA), or other programmable logic device, discrete gate or transistor logic, discrete hardware components, or any combination thereof designed to perform the functions described herein. A general purpose processor may be a microprocessor, or, any conventional processor, controller, microcontroller, or state machine. A processor also may be implemented as a combination of computing devices, such as a combination of a DSP and a microprocessor, a plurality of microprocessors, one or more microprocessors in conjunction with a DSP core, or any other such configuration. In some embodiments, particular processes and methods may be performed by circuitry that is specific to a given function. The memory (e.g., memory, memory unit, storage device) may include one or more devices (e.g., RAM, ROM, Flash memory, hard disk storage) for storing data and/or computer code for completing or facilitating the various processes, layers and modules described in the present disclosure. The memory may be or include volatile memory or non-volatile memory, and may include database components, object code components, script components, or any other type of information structure for supporting the various activities and information structures described in the present disclosure. According to an exemplary embodiment, the memory is communicably connected to the processor via a processing circuit and includes computer code for executing (e.g., by the processing circuit or the processor) the one or more processes described herein.

The present disclosure contemplates methods, systems and program products on any machine-readable media for accomplishing various operations. The embodiments of the present disclosure may be implemented using existing computer processors, or by a special purpose computer processor for an appropriate system, incorporated for this or another purpose, or by a hardwired system. Embodiments within the scope of the present disclosure include program products comprising machine-readable media for carrying or having machine-executable instructions or data structures stored thereon. Such machine-readable media can be any available media that can be accessed by a general purpose or special purpose computer or other machine with a processor. By way of example, such machine-readable media can comprise RAM, ROM, EPROM, EEPROM, or other optical disk storage, magnetic disk storage or other magnetic storage devices, or any other medium which can be used to carry or store desired program code in the form of machine-executable instructions or data structures and which can be accessed by a general purpose or special purpose computer or other machine with a processor. Combinations of the above are also included within the scope of machine-readable media. Machine-executable instructions include, for example, instructions and data which cause a general purpose computer, special purpose computer, or special purpose processing machines to perform a certain function or group of functions.

Although the figures and description may illustrate a specific order of method steps, the order of such steps may differ from what is depicted and described, unless specified differently above. Also, two or more steps may be performed concurrently or with partial concurrence, unless specified differently above. Such variation may depend, for example, on the software and hardware systems chosen and on designer choice. All such variations are within the scope of the disclosure. Likewise, software implementations of the described methods could be accomplished with standard programming techniques with rule-based logic and other logic to accomplish the various connection steps, processing steps, comparison steps, and decision steps.

It is important to note that the construction and arrangement of the systems and components shown in the various exemplary embodiments is illustrative only. Additionally, any element disclosed in one embodiment may be incorporated or utilized with any other embodiment disclosed herein. For example, the techniques and controls of the exemplary embodiment shown in at least FIG. 8 may be incorporated in the method 1100 of the exemplary embodiment shown in at least FIG. 22. Although only one example of an element from one embodiment that can be incorporated or utilized in another embodiment has been described above, it should be appreciated that other elements of the various embodiments may be incorporated or utilized with any of the other embodiments disclosed herein.

## Claims

1. A system for controlling movement of movers, the system comprising:
a track comprising a plurality of track sections that define a travel path, the plurality of track sections comprising drive coils;
a mover comprising a magnet array, the mover configured to be induced to move along the track by energization of the drive coils of the plurality of track sections; and
processing circuitry configured to:
obtain track data from simulated or actual movement of the mover along the track;
determine a value of angular misalignment between at least one of the drive coils and the magnet array due to curvature of one of the plurality of track sections based on the track data;
determine, based on the value of angular misalignment, a correction for a control of at least one of the drive coils; and
operate the at least one of the drive coils according to the correction for the control to compensate for the angular misalignment.

2. The system of claim 1, wherein the processing circuitry is further configured to update a digital twin of the track or the mover based on the value of angular misalignment.

3. The system of claim 1 or 2, wherein the processing circuitry is configured to determine the value of angular misalignment between the at least one of the drive coils and the magnet array based on back-electromotive force determined based on feedback obtained from the at least one of the drive coils as the mover is induced to move along the track by the drive coils.

4. The system of claim 3, wherein the back-electromotive force is obtained either (i) during a time period in which the drive coils are intermittently shorted, or (ii) during a time period over which the drive coils are continuously energized such that the mover travels at at least a threshold speed.

5. The system of one of claims 1 to 4, wherein the processing circuitry is configured to determine the value of angular misalignment between the at least one of the drive coils and the magnet array based on a comparison between sensor feedback obtained from a first position sensor of the track and a second position sensor of the track.

6. The system of one of claims 1 to 5, wherein the processing circuitry is configured to determine the value of angular misalignment based on a simulation of the mover along the track, the simulation based on user-input curves of the track.

7. The system of one of claims 1 to 6, wherein the processing circuitry is configured to determine the value of angular misalignment based on a simulation of the mover along the track, the simulation using curves of the track derived from user-input position and relative angular orientation of subsequent track segments.

8. The system of one of claims 1 to 7, at least one of:
wherein the track comprises a plurality of multi-axis position sensors configured to measure magnetic fields in multiple directions, wherein the processing circuitry is configured to determine the value of angular misalignment based on a ratio of magnetic field strength between two of the multiple directions;
wherein the correction for the control comprises a correction for a phase angle of at least one of the drive coils;
wherein the processing circuitry is configured to determine the correction for the control based on a ratio between the value of angular misalignment and a cycle length of the drive coils; and
wherein the processing circuitry is further configured to determine, based on sensor data from a plurality of sensors of the track, a position of the mover along the track, and correct the position of the mover along the track using numerical integration of a spline path of the track.

9. The system of one of claims 1 to 8, wherein the processing circuitry is further configured to determine, based on sensor data from a plurality of sensors of the track, a speed of the mover, and correct the speed of the mover using the value of angular misalignment.

10. The system of one of claims 1 to 9, wherein the processing circuitry is configured to use an observer control scheme to operate the drive coils, wherein the processing circuitry is configured to use modified feedback functions for the observer control scheme that account for the angular misalignment.

11. A method of controlling movement of a mover along a track of a linear drive system, the method comprising:
obtaining track data from simulated or actual movement of the mover along the track;
determining, based on the track data, a value of angular misalignment between at least one drive coil of the track and a magnet array of the mover due to curvature of one of a plurality of track sections;
determining, based on the value of angular misalignment, a correction for a control of at least one of the drive coils; and
operating the at least one of the drive coils according to the correction for the control to compensate for the angular misalignment.

12. The method of claim 11, wherein the value of angular misalignment is determined based on back-electromotive force determined based on feedback obtained from the at least one of the drive coils as the mover is induced to move along the track by the drive coils.

13. The method of claim 11 or 12, wherein the value of angular misalignment between the at least one of the drive coils and the magnet array is determined based on a comparison between sensor feedback obtained from a first position sensor of the track and a second position sensor of the track.

14. The method of one of claims 11 to 13, at least one of:
wherein the value of angular misalignment is determined based on a simulation of the mover along the track, the simulation based on either (i) user-input curves of the track or (ii) curves of the track that are assumed based on user-input position and relative angular orientation of subsequent track segments;
wherein the track data comprises sensor data obtained from a plurality of multi-axis position sensors, the plurality of multi-axis position sensors configured to measure magnetic fields in multiple directions, wherein the value of angular misalignment is determined based on a ratio of magnetic field strength between two of the multiple directions; and
the method further comprising adjusting at least one of a position parameter, a velocity parameter, or a digital twin based on the angular misalignment.

15. A linear drive system, comprising:
a track comprising a plurality of track sections that define a travel path, the plurality of track sections comprising coils;
a mover comprising a magnet array, the mover configured to be induced to move along the track by energization of the coils of the plurality of track sections; and
processing circuitry configured to:
obtain track data from simulated or actual movement of the mover along the track;
determine a value of angular misalignment between at least one of the coils and the magnet array due to curvature of one of the plurality of track sections based on the track data; and
adjust operation of the simulated or actual movement of the mover along the track based on the value of angular misalignment.
